(19)

Europäisches Patentamt

European Patent Office

Office européen des brevets

(11) **EP 3 188 115 A1**

(12) **EUROPEAN PATENT APPLICATION**
published in accordance with Art. 153(4) EPC

(43) Date of publication:
**05.07.2017 Bulletin 2017/27**

(21) Application number: **14905794.5**

(22) Date of filing: **14.11.2014**

(51) Int Cl.:
**G06Q 50/04** (2012.01)　　　　**G05B 19/418** (2006.01)
**G06F 19/00** (2011.01)

(86) International application number:
**PCT/JP2014/080163**

(87) International publication number:
**WO 2016/075805 (19.05.2016 Gazette 2016/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fuji Electric Co., Ltd.**
**Kawasaki-shi, Kanagawa 210-9530 (JP)**

(72) Inventor: **TANGE, Yoshio**
**Kawasaki-shi**
**Kanagawa 210-9530 (JP)**

(74) Representative: **MERH-IP Matias Erny Reichl Hoffmann**
**Patentanwälte PartG mbB**
**Paul-Heyse-Strasse 29**
**80336 München (DE)**

(54) **OPTIMUM PRODUCTION ALLOCATION DETERMINATION DEVICE, OPTIMUM PRODUCTION ALLOCATION DETERMINATION METHOD, AND PROGRAM THEREFOR**

(57)　In an optimum production-distribution determination method that determines optimum distribution of an amount of production to a plurality of producers, an each-producer supply curve model representing a relationship between an amount of supply of each producer and a marginal cost and a total supply curve model representing a relationship between a total amount of supply obtained by synthesizing each-producer supply curve models and a marginal cost are included, and an optimum price is determined from a total supply curve model in accordance with a given demanded amount. On the basis of an each-producer supply curve model and a determined optimum price, an amount-of-production candidate of each producer is determined. A production combination representing whether or not each of the producers conducts production is adjusted so that a sum of amounts of production of producers and a given demanded amount match. On the basis of a production combination and an amount-of-production candidate, distribution of an amount of production of each producer is determined.

FIG. 1

**Description**

FIELD

The embodiments discussed herein are related to an apparatus and a method that optimize the distribution of amounts of production of respective producers and to a program therefor, for a system in which products are produced and supplied by a plurality of producers to people demanding products.

BACKGROUND

A system that determines the distribution of various types of resources such as electric power, gas, steam, etc. produced by a plurality of facilities so that the cost becomes optimum and a system that determines the distribution of amounts of production for products produced by production lines so that the cost becomes optimum are known to the public.

For example, in order to minimize the total energy cost in a BTG (boiler, turbine, power generator) plant, the characteristics of each device are modeled. A system that calculates the optimum operation solution of the amount of steam production of a boiler, the amount of steam distribution and the amount of extraction steam of a turbine of a BTG plant on the basis of various types of process amounts, the electric power output correction amount of the condenser and the characteristic models of devices is known (Patent Document 1 for example).

A production plan generation program for optimizing prescribed evaluation indexes under a limitation of the capacity of a facility that produces products and a limitation of a range between the lower limit value and the upper limit value of the amount of production that is demanded is also known (Patent Document 2 for example). An example of an evaluation index is ([selling price]-[material cost]-[involved cost]). In a program such as that above, the distribution ratio of loads on facilities is calculated by linear programming.

A method is also known that determines activation/halting (on/off) of each power generator and the optimum power distribution by solving a mixed integer quadratic programming problem in order to meet a given target demand of power demand (Patent Document 3 for example).

Also, a technique that expresses problems of system control, circuit analysis, etc. by a first-order predicate logical formula or that solves such a formula so as to optimize a system has conventionally been known (Non-Patent Document 1 for example).

Specifically, logical formulas obtained by connecting quantifiers expressed by a universal quantifier ($\forall$) and an existential quantifier ($\exists$) and polynomial equalities and inequalities of other variables by using logical signs expressed by a product ($\wedge$) and a sum ($\vee$) are combined so as to obtain a first-order predicate logical formula. Among variables appearing in logical formulas, variables bound by a quantifier are referred to as bound variables and variables not bound by a quantifier are referred to as free variables. From among first-order predicate logical formulas, optimization is attempted by eliminating bound variables so as to induce a logical formula that free variables should meet.

As a known technique, a technique that performs control system design and control system analysis by using quantifier elimination method has also been disclosed (Patent Document 4 for example). According to this, a control system analysis/design device performs formulation as a linear matrix inequality (LMI) or a bilinear matrix inequality (BMI) in response to an input problem of control. Also, limitations on design specification etc. expressed as an LMI or BMI are converted into limitations in a form in which inequalities are connected by a logical sum and the control system is converted into a first-order predicate logical formula so that the control system is analyzed on the basis of a formula from which variables with quantifiers have been eliminated.

Also, as a technique of analyzing an energy of the above plant, a technique that performs analysis by generating a first-order predicate logical formula and solving the formula is known (Non-Patent Document 2 for example).

[Prior Art Document]

[Patent Document 1] Japanese Laid-open Patent Publication No. 2007-255198
[Patent Document 2] Japanese Laid-open Patent Publication No. 2010-262426
[Patent Document 3] Japanese Laid-open Patent Publication No. 2012-254007
[Patent Document 4] Japanese Laid-open Patent Publication No. 11-328239

[Non-Patent Document 1] "Algorithms of Quantifier Elimination and their Applications-Optimization by Symbolic and Algebraic Methods-", by Hirokazu Anai and Kazuhiro Yokoyama, University of Tokyo Press, 2011, p.214-221
[Non-Patent Document 2] "Visualization of Optimization Problems under Supply and Demand Balance using formula manipulation Technique", by Yoshio Tange, Satoshi Kiryu, Tetsuro Matsui, Yoshikazu Fukuyama, the 13th Control division convention of The Society of instrument and control engineers, ROMBUNNO.8C2-5

SUMMARY OF INVENTION

Technical Problem

As a general rule, a demanded amount of products varies continuously depending upon various factors. Accordingly, in order to procure sufficient products while suppressing the total procurement cost, the amounts of production of respective producers are to be distributed appropriately in accordance with the demanded amount.

As described above, the conventional techniques have determined optimum distribution by treating the above problems as a linear programming problem or a quadratic programming problem so as to solve a problem each time the demanded amount changes.

However, when an algorithm based on repeated search is used, the convergence of global optimal solution is not guaranteed, making it further difficult to obtain the solution when it is a 0-1 programming problem, including whether or not to conduct production.

It is an object of the present invention to provide a technique that guarantees convergence and makes it possible to obtain a solution easily in an optimization process of the distribution of an amount of production.

Solution to Problem

A method of the present invention is an optimum production-distribution determination method that determines optimum distribution of an amount of production to a plurality of producers, and the method has a configuration below.

A step of including each-producer supply curve models that represent a relationship between an amount of supply of each producer and a marginal cost and a total supply curve model that is obtained by synthesizing the each-producer supply curve models and that represents a relationship between a total amount of supply and a marginal cost, and determining an optimum price from the total supply curve model in accordance with a given demanded amount;

a step of determining an amount-of-production candidate of each producer on the basis of the each-producer supply curve models and the determined optimum price;

a step of adjusting a production combination that represents whether or not each of the plurality of producers conducts production so that a sum of amounts of production of respective producers and the given demanded amount match; and

a step of determining distribution of an amount of production of each producer on the basis of the production combination and the amount-of-production candidate.

Also, a program of the present invention is a an optimum production-distribution determination program that causes a computer to execute a process of determining optimum distribution of an amount of production to a plurality of producers, and the program has a configuration below.

A step of calculating a total supply curve model representing a relationship between a total amount of supply and a marginal cost by synthesizing each-producer supply curve models that represent relationships between amounts of supply of respective producers and marginal costs when the each-producer supply curve models are input;

a step of determining an optimum price on the basis of the total supply curve model in accordance with a given demanded amount;

a step of determining amount-of-production candidate of each producer on the basis of the each-producer supply curve models and the determined optimum price;

a step of adjusting a production combination that represents whether or not each of the plurality of producers conducts production so that a sum of amounts of production of respective producers and the given demanded amount match; and

a step of determining distribution of an amount of production of each producer on the basis of the production combination and the amount-of-production candidate.

Also, an apparatus of the present invention is an optimum production-distribution determination apparatus that determines optimum distribution of an amount of production to a plurality of producers, and the apparatus has a configuration as below.

A total supply curve calculation unit that calculates a total supply curve model representing a relationship between a total amount of supply and a marginal cost by synthesizing each-producer supply curve models that represent relationships between amounts of supply of producers and marginal costs when the each-producer supply curve models are input;

an optimum price search unit that determines an optimum price on the basis of the total supply curve model in accordance with a given demanded amount; and

an each-producer distribution calculation unit that determines an amount-of-production candidate of each producer on the basis of the each-producer supply curve models and the determined optimum price, adjusts a production combination that represents whether or not each of the plurality of producers conducts production so that a sum of amounts of production of respective producers and the given demanded amount match, and thereby determines distribution of an amount of production of each producer on the basis of the production combination and the amount-of-production candidate.

A recording medium of the present invention is a recording medium having stored therein an optimum production-distribution determination program that causes a computer to execute a process of determining optimum distribution of an amount of production to a plurality of producers, and the process has a configuration below.

A step of synthesizing, when each-producer supply curve model that represents a relationship between an amount of supply of each producer and a marginal cost is input, the each-producer supply curve models so as to calculate a total supply curve model representing a relationship between a total amount of supply and a marginal cost;

a step of determining an optimum price from the total supply curve model in accordance with a given demanded amount;

a step of determining an amount-of-production candidate of each producer on the basis of the each-producer supply curve models and the determined optimum price;

a step of adjusting a production combination that represents whether or not each of the plurality of producers conducts production so that a sum of amounts of production of respective producers and the given demanded amount match; and

a step of determining distribution of an amount of production of each producer on the basis of the production combination and the amount-of-production candidate.

Effects of the Invention

According to the present invention, convergence is guaranteed and a solution can be obtained easily in an optimization process of the distribution of an amount of production.

BRIEF DESCRIPTION OF DRAWINGS

FIG. 1 illustrates the outline of a method of optimizing the distribution of an amount of production of each producer by using an optimum production-distribution determination apparatus according to the first embodiment;

FIG. 2 illustrates a configuration of an optimum production-distribution determination program executed by the optimum production-distribution determination apparatus according to the first embodiment;

FIG. 3 illustrates operations of a total supply curve calculation unit in detail;

FIG. 4 illustrates operations of an optimum price search unit in detail;

FIG. 5 explains operations of an each-producer distribution calculation unit in detail;

FIG. 6 explains a method of determining how to obtain a distribution candidate for the i-th producer;

FIG. 7 illustrates distribution determination method A in FIG. 6 in detail;

FIG. 8 illustrates distribution determination method B in FIG. 6 in detail;

FIG. 9 illustrates distribution determination method C in FIG. 6 in detail;

FIG. 10 exemplifies a device configuration of a plant that is a target of the optimization of the distribution of the amount of production by the optimum production-distribution determination apparatus according to the first embodiment;

FIG. 11 illustrates supply curve models of each of steam generation facilities;

FIG. 12 illustrates a total supply curve model obtained by synthesizing supply curve models of each of steam generation facilities;

FIG. 13 illustrates a process of determining an optimum price on the basis of a total supply curve model in the first example;

FIG. 14 illustrates a method of determining amount-of-supply candidates for each of the steam generation facilities in the first example;

FIG. 15 illustrates a process of determining the distribution of an amount of production for steam generation facilities by using the amount-of-supply candidates determined in the first example;

FIG. 16 explains a process of determining an optimum price on the basis of a total supply curve model in the second example;

FIG. 17 illustrates a method of determining an amount-of-supply candidate for each of the steam generation facilities in the second example;

FIG. 18 illustrates a process of determining the distribution of an amount of production for the steam generation facilities by using the amount-of-supply candidates determined in the second example;

FIG. 19 is a configuration diagram for an optimum production-distribution determination program and a total supply curve calculation program executed by an optimum production-distribution determination apparatus according to the second embodiment;

FIG. 20 schematically illustrates the configuration of a system for which an optimum production-distribution determination apparatus according to the third embodiment conducts optimization;

FIG. 21 illustrates a configuration of a plural-stage optimum production-distribution determination program executed by the optimum production-distribution determination apparatus according to the third embodiment;

FIG. 22 exemplifies a configuration of a production and circulation base of items for which the optimum production-distribution determination apparatus according to the third embodiment conducts optimization of the distribution of the amount of supply of items;

FIG. 23 illustrates supply curve models of respective producers;

FIG. 24 illustrates a total supply curve model representing a relationship between the amount of supply of items supplied from factories and a circulation base to a store and a marginal cost;

FIG. 25 illustrates a total supply curve model representing a relationship between the amount of supply of items supplied from a circulation base to a store and a marginal cost;

FIG. 26 illustrates a total supply curve model representing a relationship between the amount of supply of items supplied from two factories to a circulation base and a marginal cost;

FIG. 27 illustrates a process of determining an optimum price in the first stage supply from the total supply curve model illustrated in FIG. 24 in an example;

FIG. 28 illustrates a method of determining a distribution candidate for each of the circulation bases that supply items to a store and a factory;

FIG. 29 explains a process of determining an optimum price in the second stage supply from the total supply curve model illustrated in FIG. 26 in an example;

FIG. 30 illustrates a method of determining a distribution candidate for each of the two factories that supply items to a circulation base;

FIG. 31 exemplifies a configuration of a production and circulation base of items for which optimization is conducted in the fourth embodiment;

FIG. 32 explains, in detail, operations of a total supply curve calculation unit of the fourth embodiment;

FIG. 33 illustrates, in detail, a process of calculating a feasible solution for a total amount of supply and a marginal cost;

FIG. 34 illustrates a logical formula obtained in an example;

FIG. 35 illustrates an example in which the logical formula of FIG. 34 is expressed by C language;

FIG. 36 exemplifies a configuration of a production and circulation base of items for which an optimum production-distribution determination apparatus according to the fifth embodiment conducts optimization;

FIG. 37 illustrates a supply curve model of each producer expressed by a logical formula;

FIG. 38 illustrates, in detail, operations of a total supply curve calculation unit according to the fifth embodiment;

FIG. 39 illustrates, in detail, a process of calculating a feasible solution for a total amount of supply and a marginal cost;

FIG. 40 illustrates, in detail, a process executed after defining the first-order predicate logic formula in FIG. 39;

FIG. 41 illustrates a logical formula obtained in an example;

FIG. 42 illustrates visualization of the logical formula of FIG. 41 in a form of a graph;

FIG. 43 illustrates a configuration of an information processing apparatus; and

FIG. 44 illustrates a recording medium.

DESCRIPTION OF EMBODIMENTS

Hereinafter, the embodiments of the present invention will be explained in detail by referring to the drawings.

<First embodiment>

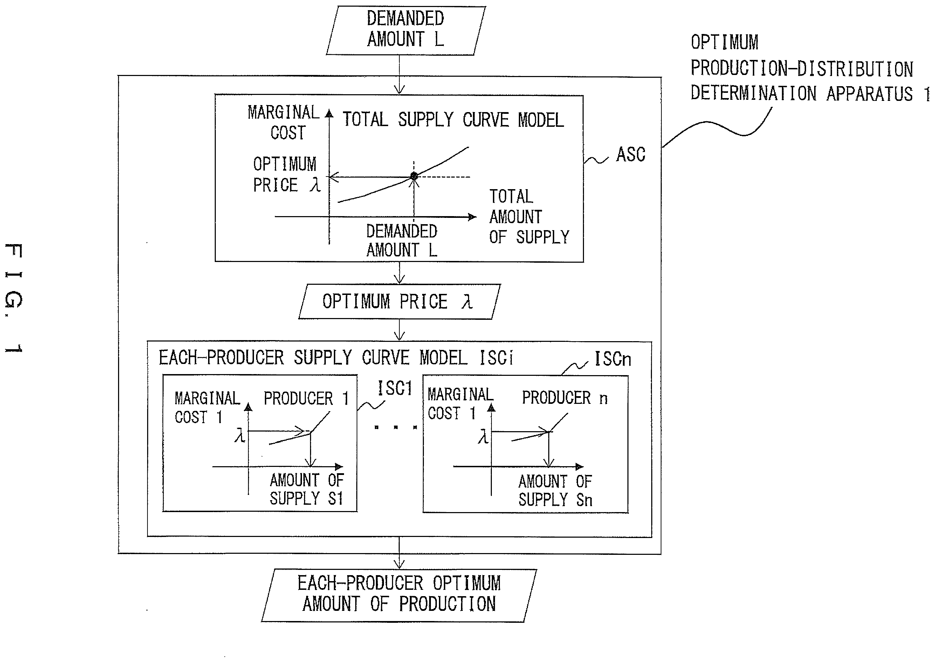

FIG. 1 illustrates the outline of a method of optimizing the distribution of an amount of production of each producer by using an optimum production-distribution determination apparatus 1 according to the present embodiment.

In the explanations below, it is assumed that the optimum production-distribution determination apparatus 1 of the present embodiment performs optimization of the distribution of the amount of production and the amount of supply of each producer in a case in which each of the plurality of producers produces products such as resources, articles, etc. and supplies all the produced products to demanders. In other words, in all of the embodiments explained below, the amount of production of producers and the amount of supply by the producers are equal.

Each of the plurality of producers is refereed to as producer i (i=1, 2, ... n (n is an integer equal to or greater than 2)). A product of producer i requires marginal cost $C'_i$ in accordance with the amount of supply thereof. In accordance with the rule in microeconomics, a marginal cost is defined as a cost necessary for carrying out additional production of one unit. Supply curve model ISCi of producer i represents a relationship between the amount of supply of producer i and the marginal cost Ci.

For each-producer supply curve models ISCi (ISC1 through ISCn), total supply curve model ASC represents a relationship between a total amount of production obtained by summing the amounts of production of producers 1 through n (= total amount of supply) and the marginal cost. The optimum production-distribution determination apparatus 1 can obtain total supply curve model ASC by synthesizing each-producer supply curve models ISCi. A method of obtaining total supply curve model ASC from each-producer supply curve models ISCi will be explained later.

When demanded amount L is given, the optimum production-distribution determination apparatus 1 according to the present embodiment determines optimum price $\lambda$, which is the marginal cost in a case in which the amount in response to the demanded amount is to be supplied by total supply curve model ASC. Then, from each-producer supply curve model ISCi and determined optimum price $\lambda$, the distribution (amount of supply Si of producer i) of the amount of production of each producer (=amount of supply) is determined.

The optimum production-distribution determination apparatus 1 realizes the optimization of the distribution of the amount of production of each producer as will be explained below by for example reading a program from a memory etc. so as to execute it in an information processing apparatus such as a personal computer etc. Next, specific explanations will be given for a configuration of a program executed by the optimum production-distribution determination apparatus 1 according to the present embodiment.

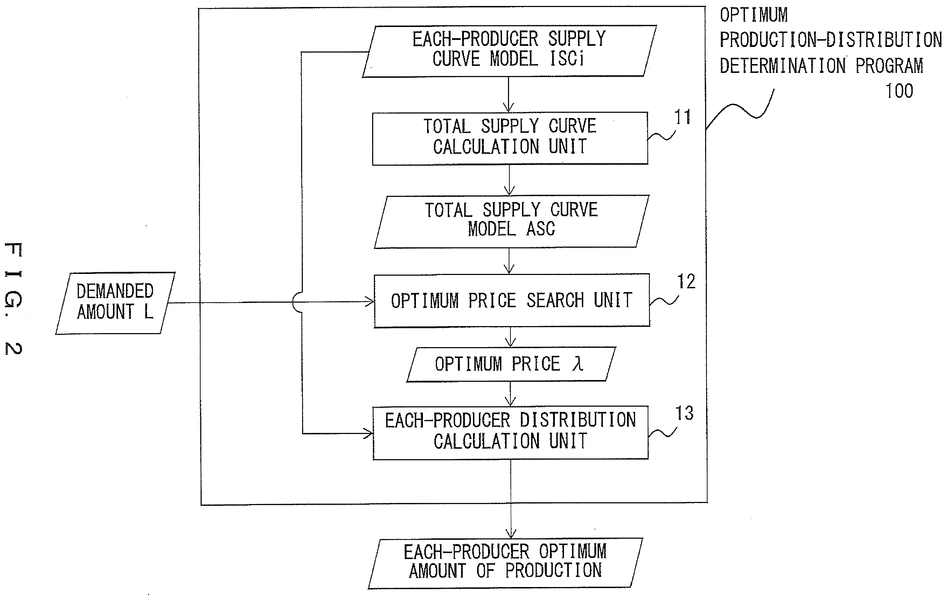

FIG. 2 illustrates a configuration of an optimum production-distribution determination program 100 executed by the optimum production-distribution determination apparatus 1 according to the present embodiment and illustrates a process flow executed by the optimum production-distribution determination apparatus 1. With the optimum production-distribution determination apparatus 1 of FIG. 1 reading the optimum production-distribution determination program 100 from a memory etc. to execute it, the computer functions as a total supply curve calculation unit 11, an optimum price search unit 12, and an each-producer distribution calculation unit 13 of FIG. 2.

The total supply curve calculation unit 11 calculates total supply curve model ASC by synthesizing each-producer supply curve models ISCi (ISC1 through ISCn) that are input.

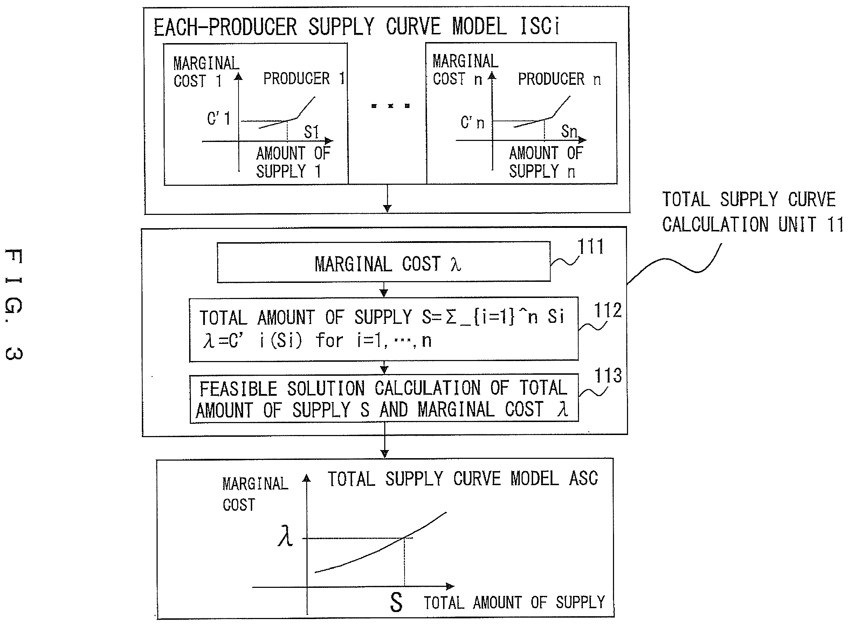

FIG. 3 illustrates operations of the total supply curve calculation unit 11 in detail.

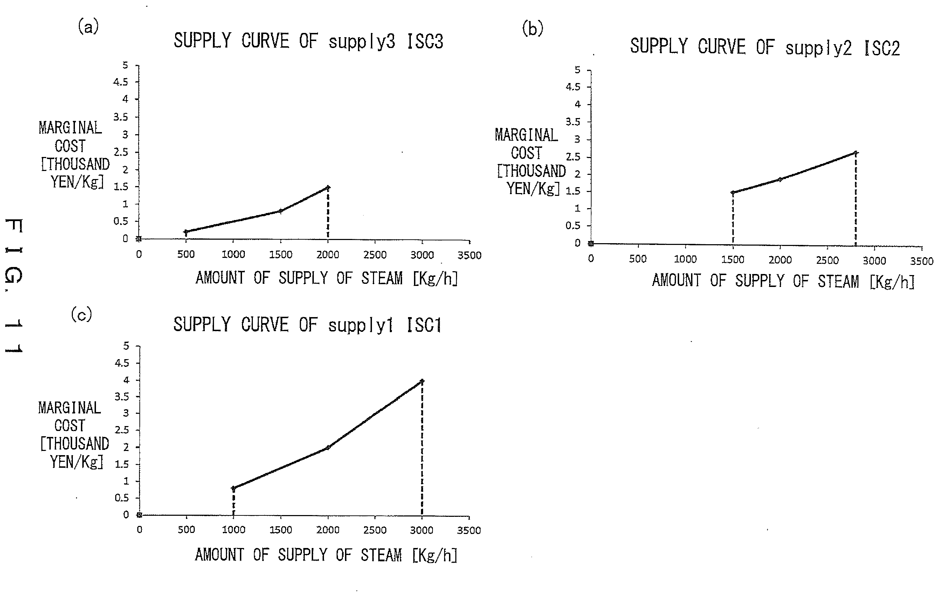

Supply curve model ISCi of producer i of FIG. 3 illustrates visualization, on a graph, of a relationship between amount of supply Si and marginal cost C'i. The total supply curve calculation unit 11 executes the series of the process flow illustrated in FIG. 3. Specifically, first, by using supply curve models ISC1 through ISCn respectively for producers 1 through n, marginal cost $\lambda$ is used (step 111 in FIG. 11) and total amount of supply S at that moment is obtained by the formula below (step 112).

[Formula 1]

$$S = \sum_{i=1}^{n} Si \qquad (1)$$
$$\lambda = C'i(Si) \ for \ i = 1, \cdots, n$$

In above formula (1), C'i (Si) represents marginal cost C' when amount of supply of producer i is Si.

The total supply curve calculation unit 11 calculates a value taken by total amount of supply S and marginal cost $\lambda$ of above formula 1 as feasible solution so as to obtain total supply curve model ASC (step 113). As illustrated in FIG. 2, the obtained total supply curve model is given to the optimum price search unit 12.

The optimum price search unit 12 obtains optimum price $\lambda$ by performing a search for an optimum price on the basis of total supply curve model ASC and given demanded amount L.

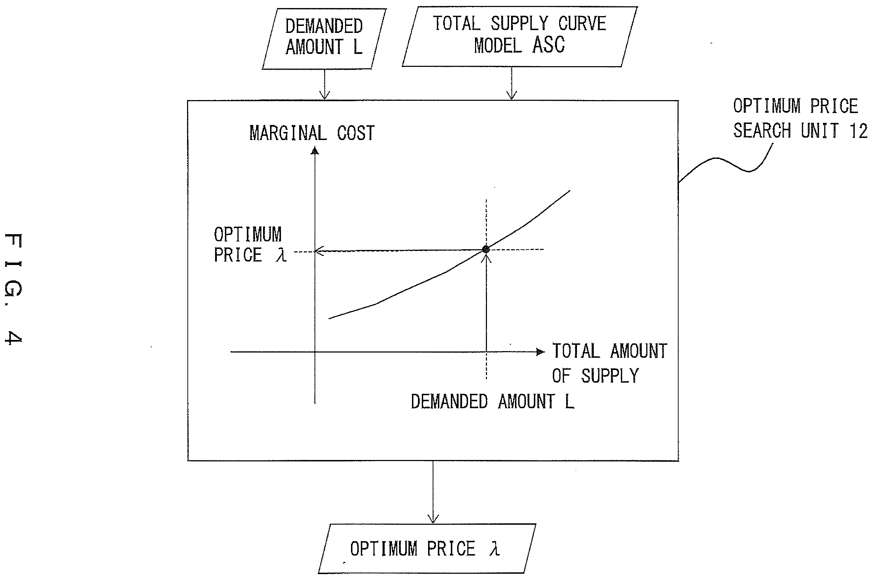

FIG. 4 illustrates operations of the optimum price search unit 12 in detail.

The optimum price search unit 12 uses total supply curve model ASC obtained through the calculation by the total supply curve calculation unit 11, and thereby searches for optimum price $\lambda$. Specifically, the optimum price search unit 12 obtains a corresponding marginal cost for a case in which the total amount of supply of total supply curve model ASC matches given demanded amount L, and treats the obtained marginal cost as optimum price $\lambda$. As illsutarted in FIG. 2, optimum price $\lambda$ is given to the each-producer distribution calculation unit 13.

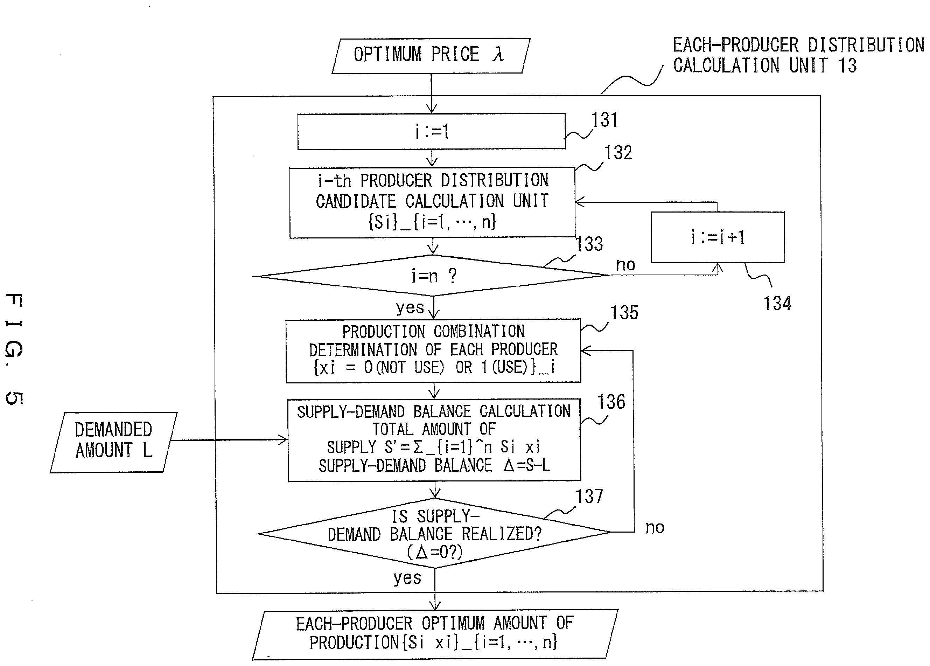

The each-producer distribution calculation unit 13 determines a candidate for the amount of production of products of producer i (=amount of supply) from the each-producer supply curve model ISCi (ISC1 through ISCn) and the optimum price $\lambda$ obtained through the search by the optimum price search unit 12. The each-producer distribution calculation unit 13 obtains an optimum amount of production (=amount of supply) for each producer on the basis of the determined amount of production (amount of supply). This will be further explained by referring to FIG. 5 through FIG. 9.

FIG. 5 explains the operations of the each-producer distribution calculation unit 13 in detail. FIG. 5 illustrates a process flow executed by the each-producer distribution calculation unit 13.

When optimum price $\lambda$ is input, the each-producer distribution calculation unit 13 first initializes i for identification among a plurality of producers and sets it to 1 (step 131). Then, the each-producer distribution calculation unit 13 calculates "distribution candidate" for the i-th producer (step 132). A distribution candidate for the i-th producer is a candidate for an amount of production in a case in which producer i conducts production/supply at optimum price $\lambda$. Hereinafter, a distribution candidate for the i-th producer will also be referred to as an amount-of-production candidate (or amount-of-supply candidate) Si. When the value of i is smaller than n (NO in step 133), 1 is added to i (step 134) and the distribution candidate of the i-th producer is calculated similarly. When the value of i becomes n (YES in step 133) the process proceeds to step 135.

Next, the each-producer distribution calculation unit 13 determines "production combination of respective producers" (step 135). A production combination of respective producers refers to information indicating whether or not each of producers 1 through n conducts production and supply, and is represented by "xi" in examples. It is assumed that when xi=1, producer i conducts production/supply and when xi=0, producer i does not conduct production and supply.

When the net total amount of supply is S from a distribution candidate for each producer obtained in step 132 through step 134, i.e., amount-of-production candidate Si and production combination of respective producers xi determined in step 135, amount of supply S is expressed by formula (2) below.

[Formula 2]

$$S = \sum_{i=1}^{n} Si \cdot xi \qquad (2)$$

The each-producer distribution calculation unit 13 calculates supply-demand balance $\Delta$ from formula (2) and given demanded amount L (step 136). Supply-demand balance $\Delta$ is expressed by formula (3) below.

$$\Delta = S - L \ldots (3)$$

On the basis of supply-demand $\Delta$ obtained by formula (3), the each-producer distribution calculation unit 13 determines whether or not a supply-demand balance is realized (step 137). Specifically, whether or not $\Delta=0$ is determined. When $\Delta=0$, the each-producer distribution calculation unit 13 treats the optimum amount of production of each producer as $\{Si \ast xi\}\_\{i=1,...,n\}$ from distribution candidate Si obtained in step 132 and production combination xi determined in step 135. When $\Delta\neq0$, the each-producer distribution calculation unit 13 returns to step 135, changes the production combination of respective producers, and repeats the above process until $\Delta$ becomes zero.

From a viewpoint of calculation efficiency, it is desirable to omit a combination once it has been tested when a production combination of respective producers is to be changed. Also, in the above process, the calculation time can further be reduced by setting xi to zero in advance for producer i, who has distribution candidate Si=0.

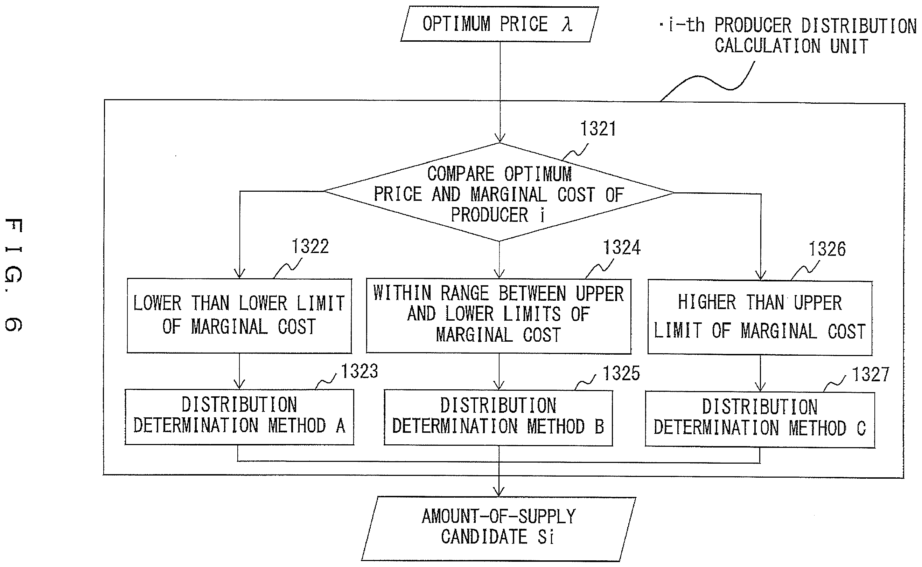

Note that as a method of a distribution candidate for the i-th producer in step 132 of FIG. 5, different determination methods are employed in accordance with a magnitude relationship between optimum price $\lambda$ and marginal cost C' i in each-producer supply curve model ISCi. This will be explained by referring to FIG. 6 through FIG. 9.

FIG. 6 explains a method of determining how to obtain a distribution candidate for the i-th producer. FIG. 6 illustrates step 132 of FIG. 5 in detail.

First, optimum price $\lambda$ obtained by the optimum price search unit 12 in FIG. 2 and the marginal cost of producer i are compared (step 1321). As described above, the marginal cost of producer i is expressed by each-producer supply curve model ISCi.

When the result of comparison between optimum price $\lambda$ and the marginal cost C' i of each-producer supply curve model ISCi indicates that optimum price $\lambda$ is lower than the lower limit of marginal cost C'i (step 1322), the distribution candidate of producer i is determined by using distribution determination method A (step 1323). When optimum price $\lambda$ is within the range between the upper and lower limits of marginal cost C'i (step 1324), distribution determination method B is used (step 1325). When optimum price $\lambda$ is higher than the upper limit of marginal cost C'i (step 1326), distribution determination method C is used (step 1327).

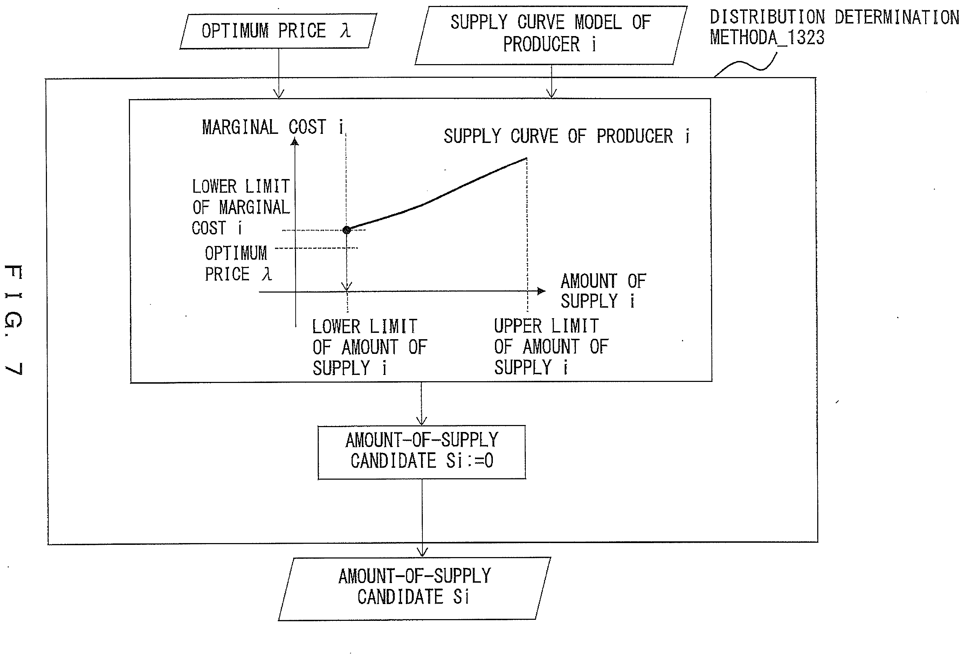

Distribution determination methods A through C are respectively illustrated in FIG. 7 through FIG. 9 in detail.

FIG. 7 illustrates distribution determination method A in step 1323 of FIG. 6 in detail.

When optimum price $\lambda$ is lower than the lower limit of marginal cost C'i, the each-producer distribution calculation unit 13 determines that it is not possible for producer i to conduct production and supply that are cost effective. Thereby, according to distribution determination method A, "Si=0" is set as a distribution candidate for the i-th producer.

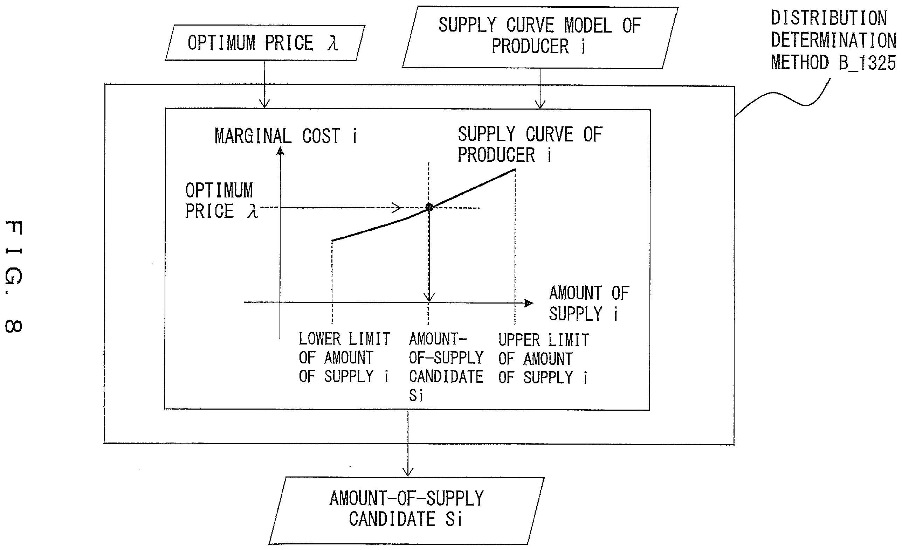

FIG. 8 illustrates distribution determination method B in step 1325 of FIG. 6 in detail.

When optimum price $\lambda$ is within the range between the upper and lower limits of marginal cost C' i, the each-producer distribution calculation unit 13 determines that it is possible for producer i to conduct production and supply that are cost effective. Thereby, according to distribution determination method B, "amount of supply Si corresponding to optimum price λ in supply curve model ISCi of producer i" is set as a distribution candidate for the i-th producer.

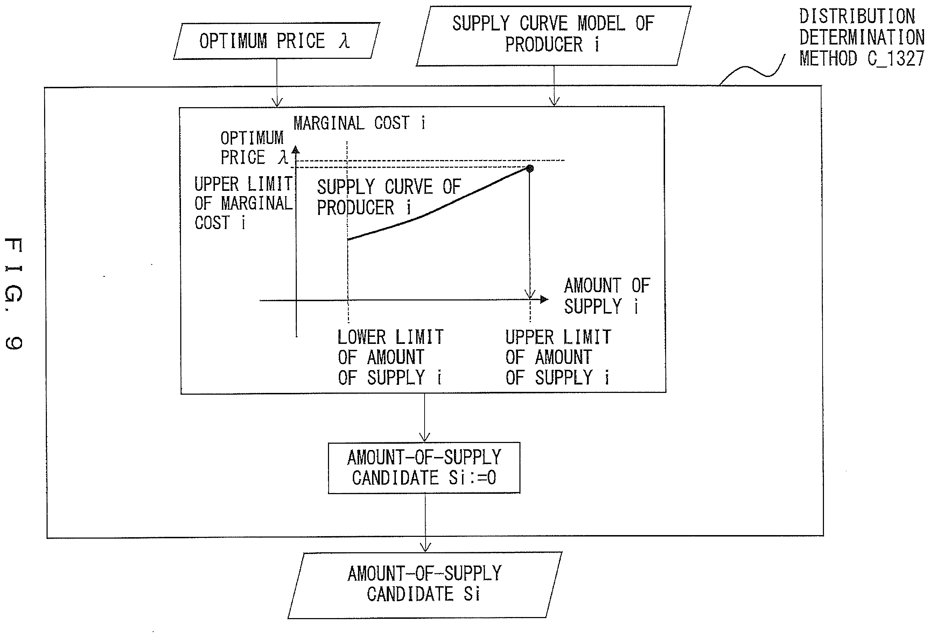

FIG. 9 illustrates distribution determination method C in step 1327 of FIG. 6 in detail.

When optimum price λ is higher than marginal cost C' i, the each-producer distribution calculation unit 13 determines that it is not possible for producer i to conduct supply that is in accordance with optimum price λ. Thereby, according to distribution determination method C, "Si=0" is set as a distribution candidate for the i-th producer.

As described above, the present embodiment obtains total supply curve model ASC from each-producer supply curve model ISCi through calculations so as to determine optimum price λ by searching for total supply curve model ASC from the total supply curve model ASC and demanded amount L. The amount-of-production candidate Si for each producer is obtained from determined optimum price λ and each-producer supply curve model ISCi, and it is determined whether or not to conduct production for each producer on the basis of production combination of respective producers xi. By setting production combination of respective producers xi so that sum S of amounts of production respective producers matches demanded amount L, the optimization of distribution of amount of production of each producer is thereby conducted.

Hereinbelow, a specific supply-demand system will be explained for a process of optimizing the distribution of the amount of production for each of the above producers.

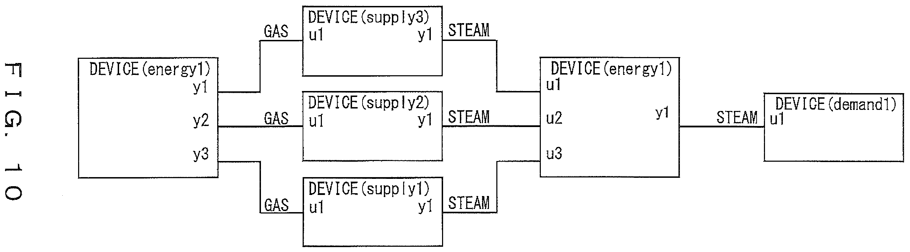

FIG. 10 exemplifies a device configuration of a plant that is a target of the optimization of the distribution of the amount of production by an optimum production-distribution determination apparatus 1 according to the present embodiment.

In the plant illustrated in FIG. 10, gas is supplied from gas supply facility energy1 to three steam generation facilities supply1 through supply3. Each of steam generation facilities supply1 through supply3 generates steam and gathers the steam in steam transport facility trans1. Steam transport facility trans1 supplies the gathered steam in steam using facility demand1, and steam using facility demand1 consumes the supplied steam. In FIG. 10, output terminals of steam (and gas used for generating steam) of the respective devices are denoted by "y1", "y2", "u1", etc.

It takes costs for three steam generation facilities supply1 through supply3 to generate steam. A method of determining the production distribution of steam for three steam generation facilities supply1 through supply3 so that steam transport facility trans1 supplies a needed amount of steam will be explained by referring to a specific example.

FIG. 11 illustrates supply curve models ISC1 through ISC3 of steam generation facilities supply1 through supply3. In the figure, the horizontal axes represent an amount of supply of steam [kg/h] while vertical axes represent a marginal cost [thousands of yen/kg], i.e., an additional cost needed to additionally produce one unit of steam (1kg in the example).

Three steam generation facilities supply1 through supply3 are either in a state such that the amount of generation of steam is zero with costs of zero (origins in FIG. 11 (a) through FIG. 11(c)) or in a state such that they respectively produce steam within the ranges of their prescribed upper and lower limits. Their upper and lower limits of steam production and marginal costs are different from each other depending upon the steam generation facilities.

The total supply curve calculation unit 11 of the optimum production-distribution determination apparatus 1 according to the present embodiment synthesizes supply curve models ISC1 through ISC3 of respective steam generation facilities supply1 through supply3 so as to calculate total supply curve model ASC.

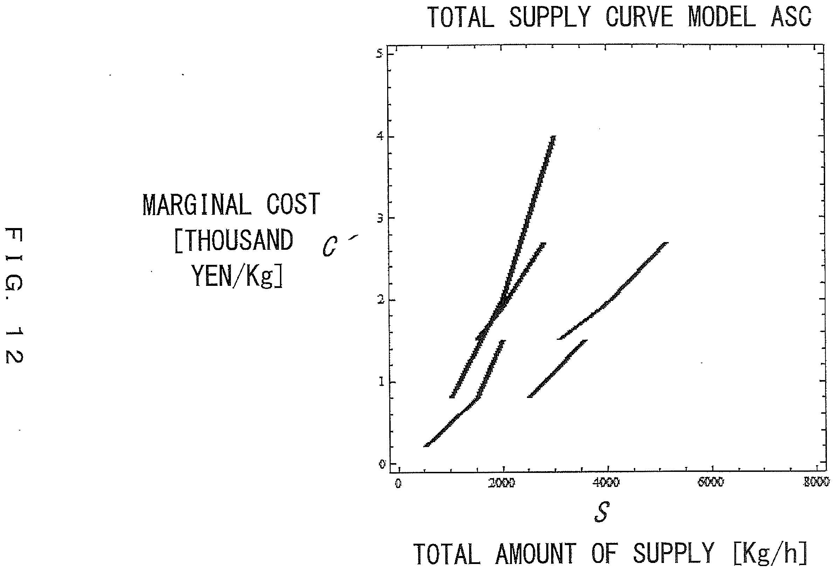

FIG. 12 illustrates total supply curve model ASC obtained by synthesizing supply curve models ISC1 through ISC3 of respective steam generation facilities supply1 through supply3 in FIG. 11. Similarly to FIG. 11, the horizontal axis represents an amount of supply [kg/h] of steam while the vertical axis represents marginal cost [thousands of yen/kg].

FIG. 12 indicates that there are characteristics including, among others, that a plurality of marginal costs can exist for the same total amount of supply, that a plurality of total amounts of supply can exist for the same marginal cost, and that a change in the total amount of supply causes discrete changes in the marginal costs in some spots.

Note that in the total supply curve model AXSC graph illustrated in FIG. 12, supply curves are drawn with thicker lines than those for each-producer supply curve models ISC1 through ISC3 of FIG. 11 for better visibility. Paying attention to one of the plurality of curves in the graph, marginal cost C' is determined uniquely for an amount of supply S. This applies to the drawings that will be referred to in the explanations below.

Even when the total supply curve model ASC has the above characteristics, the optimum production-distribution determination apparatus 1 optimizes the distribution of the amount of production of steam of each steam generation facility when an amount of steam is to be supplied to steam transport facility trans1 from three steam generation facilities supply1 through supply3.

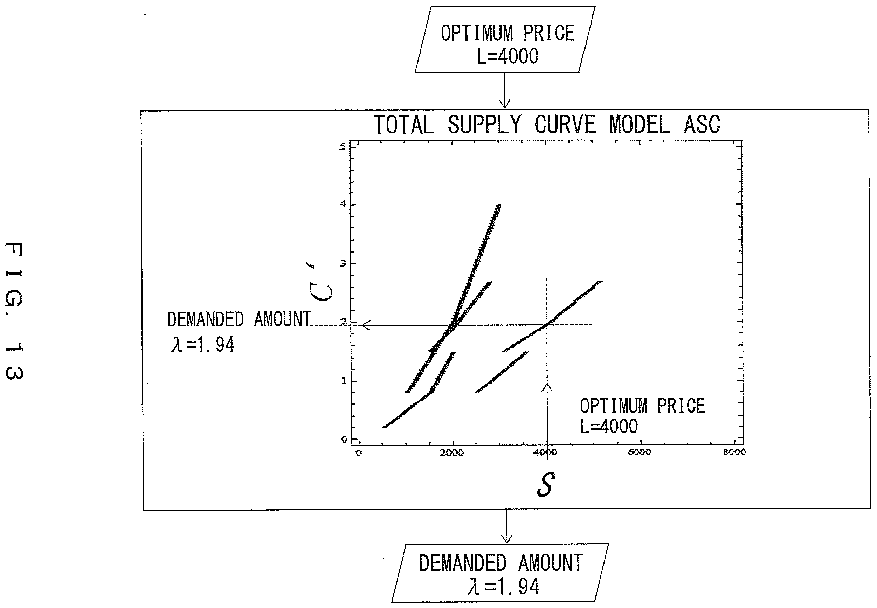

FIG. 13 illsutrates a process of determining optimum price A on the basis of the total supply curve model ASC of FIG. 12 in the present example.

In the present example, it is assumed that given demanded amount L of steam is L=4000[kg/h]. Then, the marginal cost for supplying steam of L=4000[kg/h] is 1.94[thousand yen/kg] from the total supply curve model ASC shown in FIG. 13. Accordingly, the optimum price search unit 12 of the optimum production-distribution determination apparatus 1 sets optimum price λ to λ=1.94.

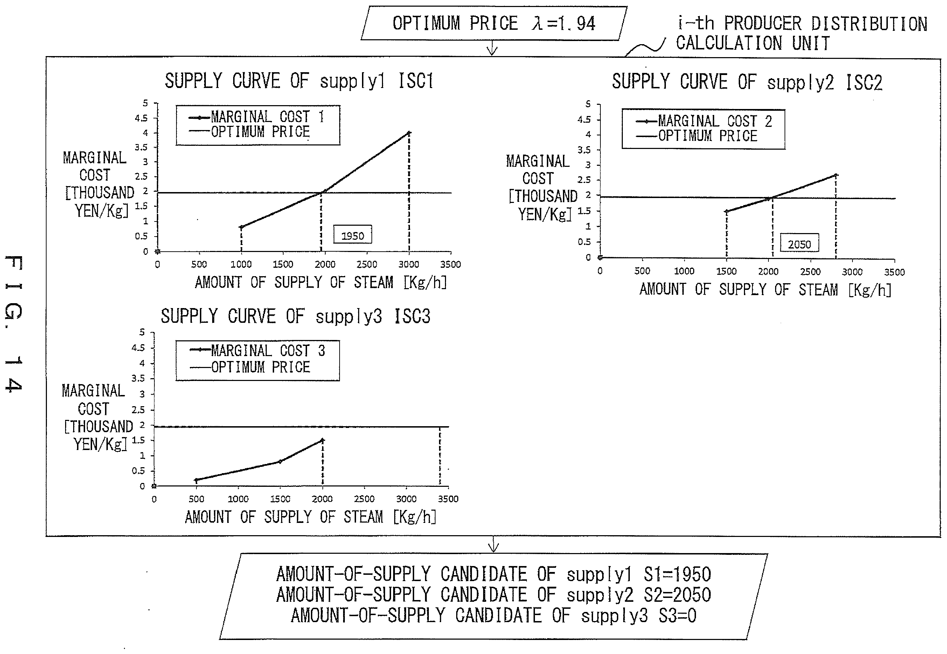

FIG. 14 illustrates a method of determining amount-of-supply candidates S1 through S3 for each of steam generation facilities supply1 through supply3.

On the basis of the optimum price λ determined by the optimum price search unit 12, the each-producer distribution calculation unit 13 of the optimum production-distribution determination apparatus 1 determines the amount-of-supply candidate of steam for each of three steam generation facilities supply1 through supply3.

Referring to supply curve model ISC1 of "supply1" from among the three steam generation facilities, a marginal cost matching optimum price λ=1.94 exists. Then, according to distribution determination method B of FIG.8, amount-of-supply candidate S1 of steam corresponding to the marginal cost that matches optimum price λ is obtained as S1=1950[kg/h]. Similarly for "supply2", according to distribution determination method B, amount-of-supply candidate S2 of supply2 is obtained as "S2=2050[kg/h]".

Meanwhile, according to supply curve model ISC3 of "supply3", a marginal cost that matches optimum price λ=1.94 does not exist. Because optimum price λ=1.94 is higher than the upper limit of the marginal cost, amount-of-supply candidate S3 of steam of supply3 satisfies S3=0[kg/h] according to distribution determination method C of FIG. 9.

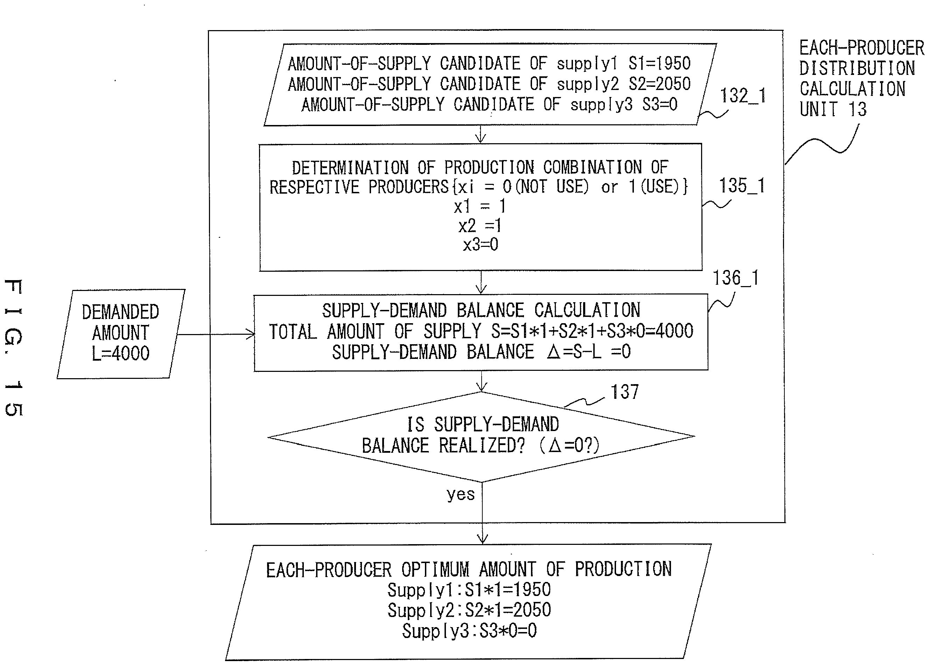

FIG. 15 illustrates a process of determining the distribution of an amount of production for steam generation facilities supply1 through supply3 by using the determined amount-of-supply candidates S1 through S3. FIG. 15 illustrates a process flow executed by the each-producer distribution calculation unit 13. Step 132_1 through step 137 illustrated in FIG. 15 correspond to step 132 through step 137 in FIG. 15, respectively.

In step 132_1, amount-of-supply candidates S1 through S3 are determined. The detailed aspects of the process here are as explained in FIG. 14.

In step 135_1, the each-producer distribution calculation unit 13 determines a production combination of respective producers. Specifically, for each of the steam generation facilities supply1 through supply3, which are producers, whether to produce steam (xi=1) or not to produce steam (xi=0) is determined by using variables xi (x=1, 2, 3). In the example illustrated in FIG. 15, it is determined that "x1=1(use)", "x2=1(use)" and "x3=0(not use)" have been determined for supply1 through supply3, respectively.

In step 136_1, the each-producer distribution calculation unit 13 calculates supply-demand balance Δ by using the production combination "x1=1, x2=1, x3=0" determined in step 135_1. In this example, total amount of supply S is as below.

$$\mathrm{S=S1*x1+S2*x2+S3*x3=1950*1+2050*1+0*0=4000[kg/h]}$$

Demanded amount L given to the optimum production-distribution determination apparatus 1 is L=4000[kg/h], and thus, supply-demand balance Δ is obtained as below.

$$\mathrm{\Delta=S-L=4000-4000=0}$$

In step 137, the each-producer distribution calculation unit 13 determines whether or not the supply-demand balance is realized (whether or not Δ=0) on the basis of supply-demand balance Δ obtained in step 136_1.

In the above example, Δ=0. Accordingly, the distribution of the amount of production of steam for each of steam generation facilities supply1 through supply3 is determined from amount-of-supply candidates S1 through S3 in step 132_1 and the production combination determined in step 135_1. Specifically, the amount of production of supply1 is determined to be S1*x1=1950[kg/h], and those of supply2 and supply3 are determined to be S2*x2=2050[kg/h] and S3*x3=0[kg/h], respectively.

Note that when the supply-demand balance is not realized and Δ≠0, the process returns from step 137 to 135_1 similarly to FIG. 5 so as to change the production combination and repeat the above processes until Δ≠0, although this portion is omitted herein because a case in which the supply-demand balance is realized is being exemplified here.

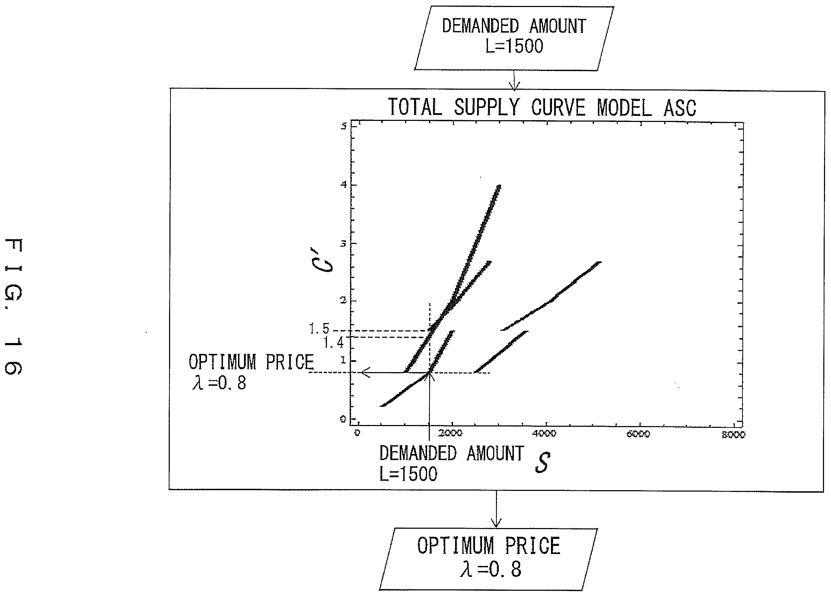

Further, while configurations of devices that are targets of optimization, supply curve models ISCi of respective producers, and total supply curve model ASC obtained by the each-producer supply curve models ISCi are similar to those in the above examples, explanations will be given for a case in which demanded amounts L are different by referring to FIG. 16 through FIG. 18.

FIG. 16 explains a process of determining optimum price λ on the basis of the total supply curve model ASC illustrated in FIG. 12.

In the present example, it is assumed that demanded amount L of steam is L=1500[kg/h]. In such a case, while there are three marginal costs, i.e., 1.4[thousand yen/kg], 1.5[thousand yen/kg] and 0.8[thousand yen/kg] for supplying steam of L=1500, the minimum value is 0.8. Thus, the optimum price search unit 12 of the optimum production-distribution determination apparatus 1 sets optimum price λ to λ=0.8.

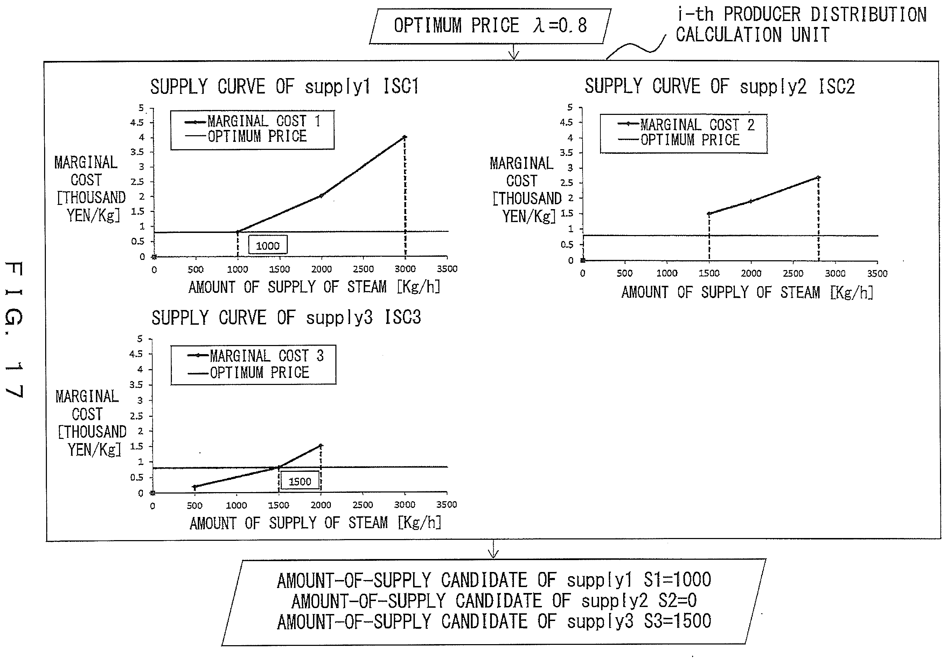

FIG. 17 illustrates a method of determining an amount-of-supply candidate for each of steam generation facilities supply1 through supply3.

The each-producer distribution calculation unit 13 of the optimum production-distribution determination apparatus 1 refers to each-producer supply curve models ISC1 through ISC3 and, when the optimum price λ=0.8 [thousand yen/kg] matches the marginal cost, treats the amount of supply of steam corresponding to that marginal cost as the amount-of-supply candidate.

In the present example, from among three steam generation facilities supply1 through supply3, amount-of-supply candidate S1 is obtained as S1=1000 [kg/h] for supply1 by distribution determination method B in FIG. 8 and amount-of-supply candidate S3 is obtained as S3=1500[kg/h] for supply3. Regarding supply2, optimum price λ=0.8 is lower than the lower limit of the marginal cost of supply curve model ISC2. Accordingly, by distribution determination method A in FIG. 7, amount-of-supply candidate S2 for supply2 is obtained as S2=0[kg/h].

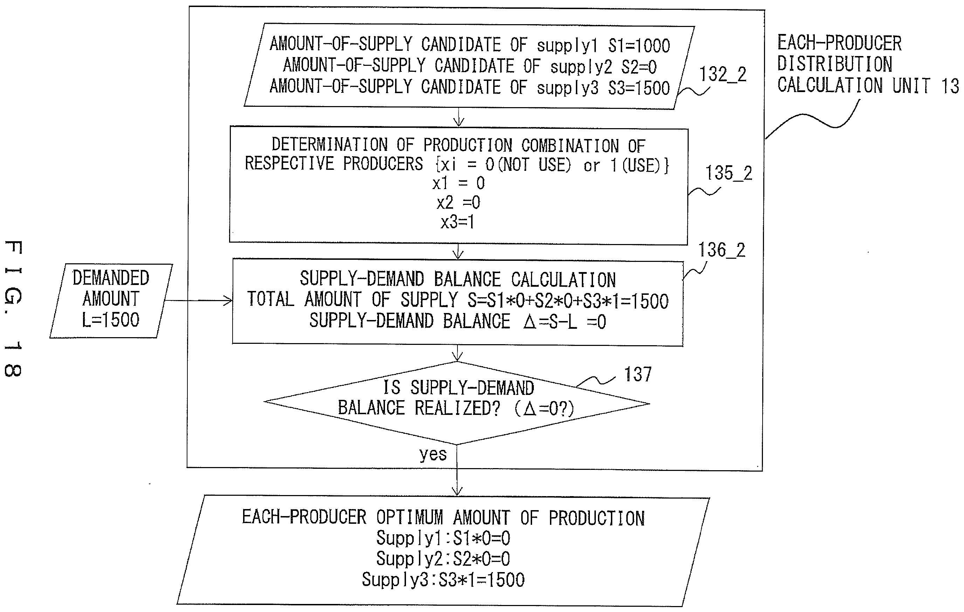

FIG. 18 illustrates a process of determining the distribution of an amount of production for respective steam generation facilities supply1 through supply3 by using determined amount-of-supply candidates S1 through S3. FIG. 18 illustrates a process flow executed by the each-producer distribution calculation unit 13. Step 132_2 through step 137 illustrated in FIG. 18 correspond to step 132 through step 137 in FIG. 5, respectively. The detailed aspects of the respective steps are as described in the above example in reference to FIG. 15.

Note in the present example that "x1=0, x2=0, x3=1" is determined as a production combination of steam generation facilities supply1 through supply3 in step 135_2. Because amount-of-supply candidate S2 of supply2 when amount-of-supply candidate Si is determined for each steam generation facility in the process of step 132_2 is S2=0, it is desirable to utilize this fact in step 135_2 so as to determine a production combination. Specifically, it is desirable to determine variable x2 to be zero for supply2 with the amount-of-supply candidate of zero and determine a combination for x1 and x3 that remain. The combination (x1, x3) of values that x1 and x3 can take is one of the four cases of (1,1), (1,0), (0,1), and (0,0). FIG. 18 illustrates a production combination that results in zero as the supply-demand balance Δ from among the above four cases.

Thereby, in the present example as well, the distribution of the amount of production of steam of steam generation facilities supply1 through supply3 can be determined as S1*x1=1000*0=0, S2*x2=0*0=0, and S3*x3=1500*1=1500[kg/h], respectively.

Also in each of the examples explained by referring to FIG. 10 through FIG. 15 and FIG. 16 through FIG. 18, optimum price λ is obtained by using total supply curve model ASC calculated from each-producer supply curve model ISC and the amount-of-production candidate of each producer is determined on the basis of this. Then, by changing production combination xi of respective producers appropriately so that supply-demand balance Δ is realized, it is determined whether or not each of the producers conducts production and supply, so that the distribution of the amount of production of each producer is determined.

This method demonstrates that the distribution of an amount of production that meets demanded amount L is possible when a result of a search for the optimum price indicates the existence of a marginal cost that corresponds to demanded amount L in total supply curve model ASC. In such a case, by determining how to distribute the amount of production by determined optimum price λ, the amount of production of each producer is optimized. When a marginal cost corresponding to demanded amount L does not exist in total supply curve model ASC, it is recognized that production that meets demanded amount L is not possible.

As described above, the optimum production-distribution determination apparatus 1 of the present embodiment does not employ an algorithm based on repeated search, which is employed in the conventional optimization methods of the distribution of the amount of production. The number of times of repeated search for obtaining a production combination that results in supply-demand balance Δ=0 is limited and a production combination may take two values of either "use" or "not use", leading to an effect wherein the convergence of the global optimal solution is guaranteed. Even when the problem is a 0/1 programming problem including whether or not to conduct production, the present embodiment makes it possible to obtain the solution easily.

Further, unlike the conventional optimization methods, the step of determining the optimum distribution of an amount of production can be seen from the outside, and thereby how the amount of production is distributed to producers is clear from the relationship between the optimum price and supply curves. In some cases, there are a plurality of solutions. This is because a plurality of corresponding marginal costs exist on a supply curve model for, for example, a given demanded amount L, or for other reasons. However, even in this case, how the amount of amount of production is distributed is made clear by treating the lowest marginal cost as optimum price λ. By thus determining the optimum distribution of an amount of production, reasonable explanations for an optimum distribution obtained as an optimum solution can be given to the user of the optimum production-distribution determination apparatus 1 of the present embodiment such as each producer etc. using optimum price. It also makes it possible to use the difference between a marginal cost and an optimum price as an index for the degree which indicates that each producer should reduce the cost for the optimum distribution obtained as an optimum solution.

Note that the optimum production-distribution determination apparatus 1 of the present embodiment may employ a configuration in which the above step of determining the distribution of an amount of production to each producer is visualized by using the total supply curve model ASC and each-producer supply curve models ISC. Specifically, FIG. 13 and FIG. 14 or FIG. 16 and FIG. 17 are displayed on a display unit such as a monitor etc. This makes it easy for the user of the optimum production-distribution determination apparatus 1 to use a monitor etc. to confirm how optimum price $\lambda$ and the distribution of an amount of production of each producer is determined.

In addition, the present embodiment makes it possible to obtain an optimum solution through a process in which the amount-of-production candidate of each producer is determined for optimum price $\lambda$ and thereafter production combination xi is changed appropriately so that supply-demand balance $\Delta$ is realized. It is possible to reduce the calculation resources and calculation time in comparison with a case in which a formulated problem is solved each time. This also makes it possible to respond to a problem for which very swift responsiveness such as the determination of power determination etc. is required. As described above, the solution is obtained by changing production combination xi a limited number of times when needed, making it possible to also estimate in advance the maximum value of the converging time of solution.

<Second embodiment>

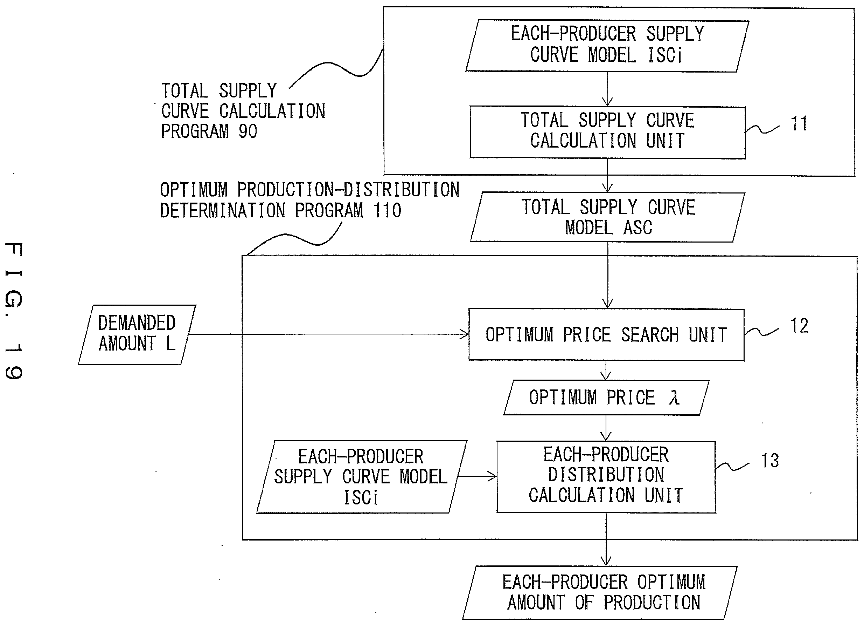

In the above embodiment, the execution of the optimum production-distribution determination program 100 calculates total supply curve model ASC from supply curve model ISCi of each producer, search for optimum price $\lambda$ and optimizes the distribution of the amount of production of each producer by using obtained total supply curve model ASC. The present embodiment is different from the above embodiment in that the optimum production-distribution determination program uses a total supply curve model obtained by a different program so as to search for optimum price $\lambda$ and to optimize the distribution of each producer. Hereinafter, the points different from those in the first embodiment will be explained by referring to FIG. 19.

FIG. 19 is a configuration diagram for an optimum production-distribution determination program 110 and a total supply curve calculation program 90 executed by the optimum production-distribution determination apparatus 1 according to the present embodiment. FIG. 19 illustrates a process flow executed by the optimum production-distribution determination apparatus 1. As illustrated in FIG. 19, the optimum production-distribution determination apparatus 1 according to the present embodiment reads the total supply curve calculation program 90 and the optimum production-distribution determination program 110 from a memory etc. so as to execute them.

A computer executes the total supply curve calculation program 90 so as to function as the total supply curve calculation unit 11. The operations of the total supply curve calculation unit 11 are similar to those described by referring to FIG. 2 and other figures in the explanations for the above embodiment. The total supply curve calculation program 90 outputs total supply curve model ASC obtained by the total supply curve calculation unit 11 as an execution result.

The computer executes the optimum production-distribution determination program 110 so as to function as the optimum price search unit 12 and the each-producer distribution calculation unit 13. The operations of the optimum price search unit 12 and the each-producer distribution calculation unit 13 are similar to those described by referring to FIG. 2 and other figures in the explanations for the above embodiment.

The optimum production-distribution determination program 110 determines optimum price $\lambda$ for given demanded amount L by using total supply curve model ASC calculated beforehand and obtained in the total supply curve calculation program 90 that is a different program. Then, it determines the distribution of the amount of production of each producer from optimum price $\lambda$ and each-producer supply curve model ISCi that was also used in the total supply curve calculation unit 11 of the total supply curve calculation program 90.

It is also possible to employ a configuration in which for example a given computer executes the total supply curve calculation program 90 so as to calculate total supply curve model ASC, and obtained total supply curve model ASC is input to a different computer so as to make that computer execute the optimum production-distribution determination program 110.

The configuration of the present embodiment as well can achieve effects similar to those achieved by the first embodiment.

<Third embodiment>

The above embodiments conduct optimization of the distribution of the amount of production for a system in which a plurality of producers supply products to a given demander. Specifically, the optimization is for a system in which the supply of products from producers to a demander is conducted in one stage. The present embodiment differs in that it is for a system in which production and supply are conducted in a plurality of steps before the supply of products from producers are supplied to the final demander.

Explanations will hereinafter be given for a determination method of the distribution of an amount of production to each producer by the optimum production-distribution determination apparatus 1 according to the present embodiment, centering on the points that are different from the above embodiments.

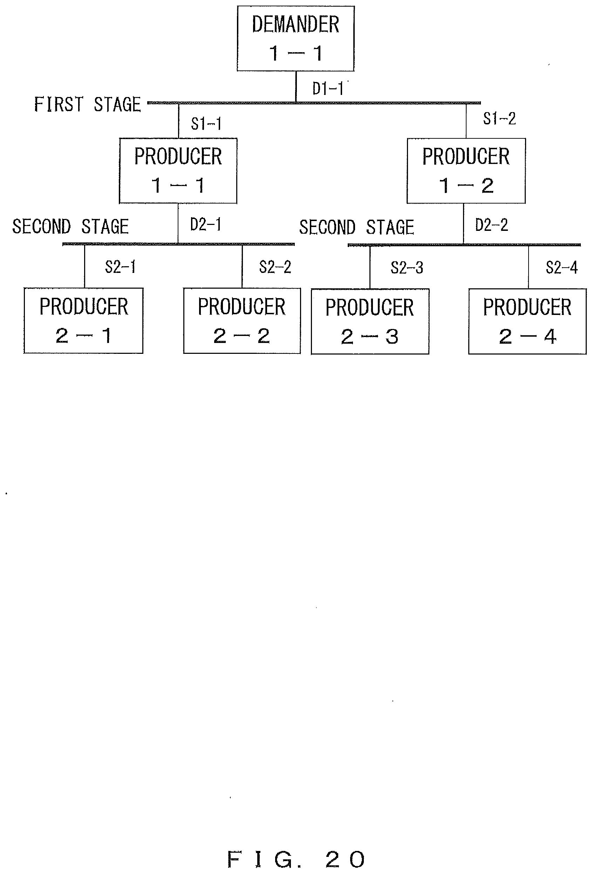

FIG. 20 schematically illustrates the configuration of a system for which the optimum production-distribution determination apparatus 1 according to the present embodiment conducts optimization.

In the system exemplified in FIG. 20, production and supply are conducted in two stages and ultimately the product is supplied to demander 1-1. Herein, conducting production and supply for demander 1-1, who will receive the product in the end, is defined as "first-stage production and supply" and conducting production and supply for a person corresponding to a producer in the first stage is defined as "second-stage production and supply". These definitions will apply to the explanations below.

According to these definitions, "producer 1-1", who is a producer in the first-stage production and supply, is "demander 2-1", who receives supply from "producer 2-1" and "producer 2-2", in the second-stage production and supply. Similarly, "producer 1-2", who is a producer in the first-stage production and supply, is "demander 2-2", who receives supply from "producer 2-3" and "producer 2-4", in the second-stage production and supply.

In FIG. 20, for example, the amount of production of producer 1-2 is denoted by "S1-2" and the demanded amount for the second-stage producer by the producer 1-2 is denoted by "D2-2".

In the explanations below, this is generalized so that symbol "j" is used for identifying a plurality of producers that conduct production and supply in the i-th stage and the amount of production of producer i-j is denoted by "Si-j" and the demanded amount for the (i+1)-th stage producer of producer i-j is denoted by "D(i+1)-j".

In the explanations below, in order to distinguish from the above case where distribution of the amount of production is determined in the production and supply of products in one stage, an optimum production-distribution determination program executed by the optimum production-distribution determination apparatus 1 according to the present embodiment is treated as a "plural-stage optimum production-distribution determination program 120".

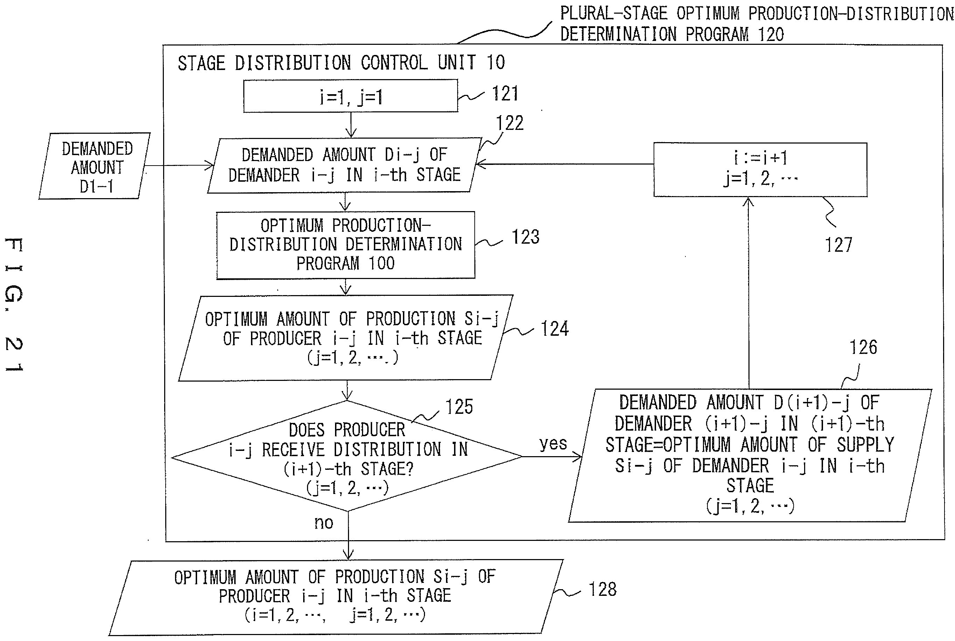

FIG. 21 illustrates a configuration of the plural-stage optimum production-distribution determination program 120 executed by the optimum production-distribution determination apparatus 1 according to the present embodiment. FIG. 21 illustrates a process flow executed by the optimum production-distribution determination apparatus 1.

As illustrated in FIG. 21 as well, the plural-stage optimum production-distribution determination program 120 uses the optimum production-distribution determination program 100 explained by referring to FIG. 2 so as to optimize the distribution of the amount of production in each stage.

The series of processes in FIG. 21 is executed by a stage distribution control unit 10 that controls the optimization process of the distribution of the amount of production for each stage. By the optimum production-distribution determination apparatus 1 reading the plural-stage optimum production-distribution determination program 120 from a memory etc. so as to execute it, the computer functions as the stage distribution control unit 10.

In the plural-stage optimum production-distribution determination program 120, first in step 121, the stage distribution control unit 10 initializes "i", which represents the ordinal number of the stage to which the production and supply belongs, and "j", which identifies a producer in a given stage, so that i=1 and j=1.

Then, in step 122, the stage distribution control unit 10 sets demanded amount Di-j of demander i-j in the i-th stage from given demanded amount D1-1 of demander 1-1. When i=j=1, given demanded amount D1-1 is set as demanded amount Di-j (D1-1 in this example) of demander i-j (demander 1-1 in this example) in the i-th stage (i=1) as it is.

Next, in step 123, the stage distribution control unit 10 executes the above optimum production-distribution determination program 100. The process executed in step 123 is similar to that explained by referring to FIG. 2 and other figures.

In step 124, by using the execution result of the optimum production-distribution determination program 100, amount of production Si-j of each producer for supplying products to demander i-j is determined. When i=1, amount of production S1-1 of producer 1-1 and amount of production S1-2 of producer 1-2 are determined in FIG. 20.

In step 125, the stage distribution control unit 10 determines whether or not production and supply will be distributed in (i+1)-th stage, which is the subsequent stage, between a plurality of producers for producer i-j for which the amount of production was set in step 124. When the products of producer i-j are based on the production and supply from the plurality of producers in the (i+1)-th stage, the process proceeds to step 126.

In step 126, the stage distribution control unit 10 sets the amount of production distributed for each producer i-j in the i-th stage set in step 124, as the demanded amount of demander (i+1)-j in the (i+1)-th stage. Specifically, demanded amount D(i+1)-j is expressed by D(i+1)-j=Si-j.

In step 127, the stage distribution control unit 10 adds 1 to i and the process returns to step 122. Thereby, when the producer (i+1)-j in the stage subsequent conducts production and supply to producer i-j in a distributed manner, similar distribution is recursively repeated for a subsequent (i+1)-th stage. In step 125, when the stage distribution control unit 10 determines that production and supply is not distributed between the producers in the subsequent (i+1)-th stage for producer i-j, the process proceeds to step 128.

In step 128, the stage distribution control unit 10 terminates the process assuming that the distribution of the amount of production for each producer (j=1, 2,...) has been decided in all stages (i=1, 2,...) of the system for which the optimization is conducted.

In the present embodiment as well, explanations will be given for a process of optimizing the distribution of the amount of production for each producer exemplifying a specific supply-demand system, similarly to the explanations of the first embodiment referring to FIG. 10 through FIG. 15 and FIG. 16 through FIG. 18.

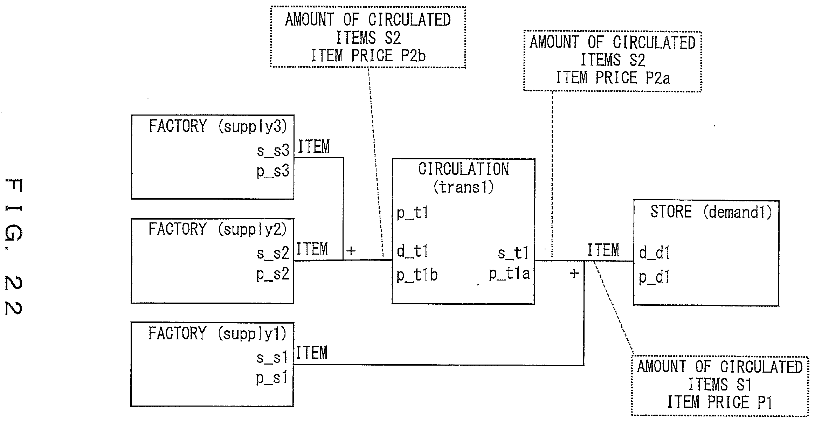

FIG. 22 exemplifies a configuration of a production and circulation base for which the optimum production-distribution determination apparatus 1 according to the present embodiment conducts optimization of the distribution of the amount of supply of items.

In the production and circulation base illustrated in FIG. 22, three facilities supply1 through supply3 produce items. From among the items, the items produced by the two factories supply2 and supply3 are gathered in circulation base trans1. The items produced in supply1 and the times of circulation base trans1 are gathered in store demand1, and are sold in in store demand1.

Costs are imposed on factories supply1 through supply3 in accordance with the number or amount of items to be produced. Because circulation trans1 purchases items from two factories supply2 and supply3 so as to deliver them to store demand1, costs are imposed on circulation trans1 in accordance with the number or amount of items to be delivered.

Note that FIG. 22 also illustrates the amount of supply of items supplied from each producer to the demander, the demanded amount of items that the demander demands from the producer, and the marginal cost. For example, the amount of items demanded by store demand1 is denoted by "d_d1" and the amount of items that circulation base trans1 supplies to store demand1 is denoted by "s_t1". The embodiments will be explained by using them later in the fifth embodiment.

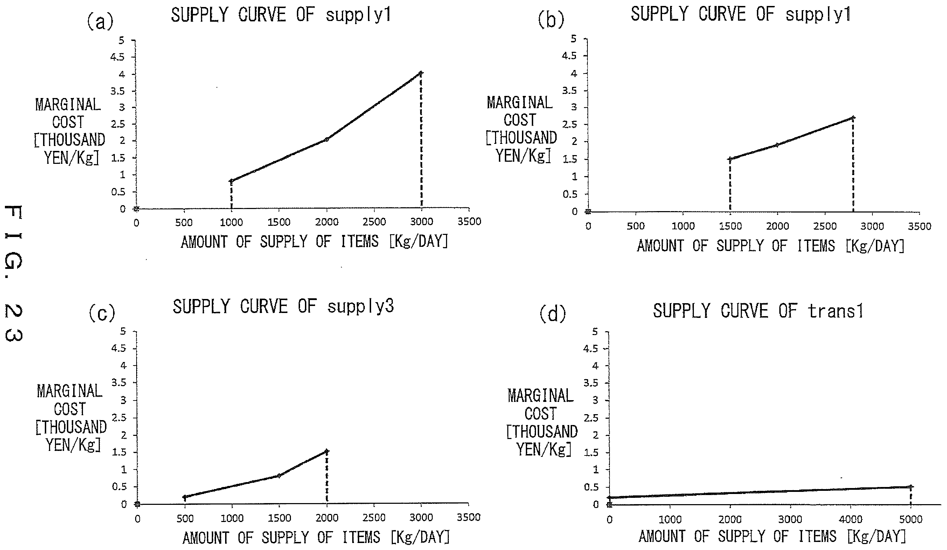

FIG. 23 illustrates supply curve models of respective producers. In the figures, the horizontal axes represent amount of supply [kg/h] of items while the vertical axes represent marginal cost [thousands of yen/kg]. In the present example, a marginal cost is an additional cost needed to additionally produce one unit of items (1kg in the example).

The supply curve models of the three factories supply1 through supply3 are either in a state in which the amount of supply is zero and the cost is also zero (origins in FIG. 23 (a) through FIG. 23(c)) or in a state in which items are produced within a range between the prescribed upper and lower limits as illustrated in FIG. 23(a) through FIG. 23(c). Each factory has different upper and lower limits for the amount of items that can be produced and supplied and has a different marginal cost.

For the supply curve model of circulation base trans1, a curve different from those of factories supply1 through supply3, which are different producers, is drawn because of the role of circulation base trans1. As described above, circulation base trans1 does not itself conduct the production of items but conducts a service of gathering items from two factories supply2 and supply3 so as to deliver them to store demand1, which is a demander. Accordingly, the supply curve model of circulation base trans1 is either in a state in which the amount of supply is zero and the cost is also zero (origins in FIG. 23(d)) or in a state in which an additional cost, which is added when one unit of items are added and delivered, is imposed.

In the present example, the distribution of the amount of production in circulation base trans1 and factory supply1 that conduct production and supply of items for store demand1 demanding the items in the end is first determined. For this, total supply curve model ASC for store demand1 is calculated from the supply curve models ISC respectively of circulation base trans1 and factory supply1. The optimum price is obtained by using the calculated and obtained total supply curve model ASC to store demand1, and the distribution of the amount of production to each of circulation base trans1 and factory supply1, which are producers, is obtained by the optimum price. Next, from supply curve models ISC regarding two factories supply2 and supply3 that supply items to circulation base trans1, total supply curve model ASC to circulation base trans1 is calculated. Then, by using calculated total supply curve model ASC to trans1, the distribution of the amount of production of each of factories supply2 and supply 3 for producing and supplying items demanded by circulation base trans1 is determined.

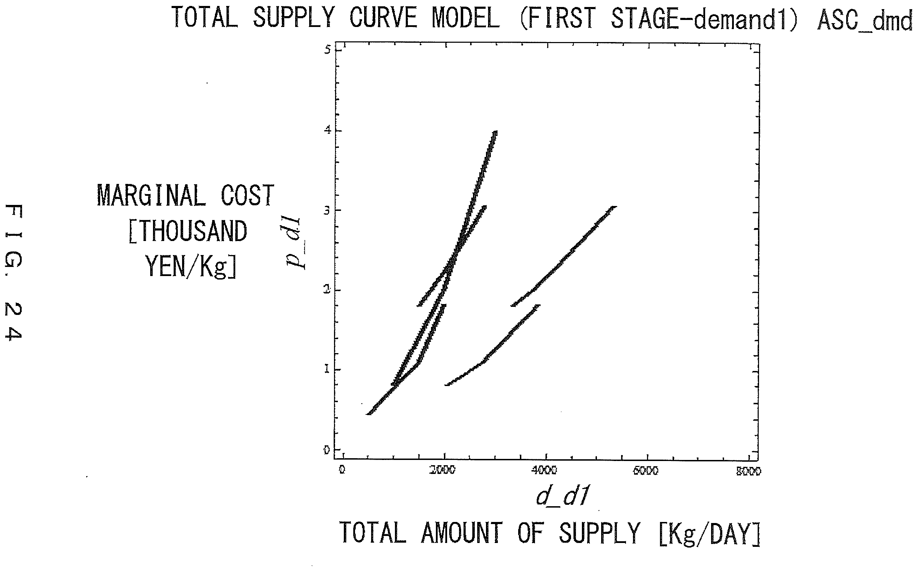

As described above, in order to optimize the distribution in a plurality of stages, a total supply curve model representing a relationship between the amount of supply that is supplied to the demander in each stage and the marginal cost and a supply curve model for a case in which items are supplied from a plurality of producers so as to supply them to a demander are to be calculated from the supply curve model of each producer in FIG. 23. This will be explained by referring to FIG. 24 through FIG. 26.

FIG. 24 illustrates total supply curve model ASC_dmd, which represents a relationship between the amount of supply of items supplied from factories supply1 through supply3 and circulation base trans1 to store demand1 and a marginal cost. Similarly to FIG. 23, the horizontal axis represents amount of supply d_d1 [kg/day] of items while the vertical axis represents marginal cost p_d1 [thousands of yen/kg].

Total supply curve model ASC_dmd illustrated in FIG. 24 is obtained by synthesizing the supply curve models of the respective producers illustrated in FIG. 23 (factories supply1 through supply3 and circulation base trans1) in the above described method.

FIG. 24 indicates that there are characteristics including, among others, that a plurality of marginal costs can exist for the same total amount of supply, that a plurality of total amounts of supply can exist for the same marginal cost, and that a change in the total amount of supply causes discrete changes in the marginal costs in some spots.

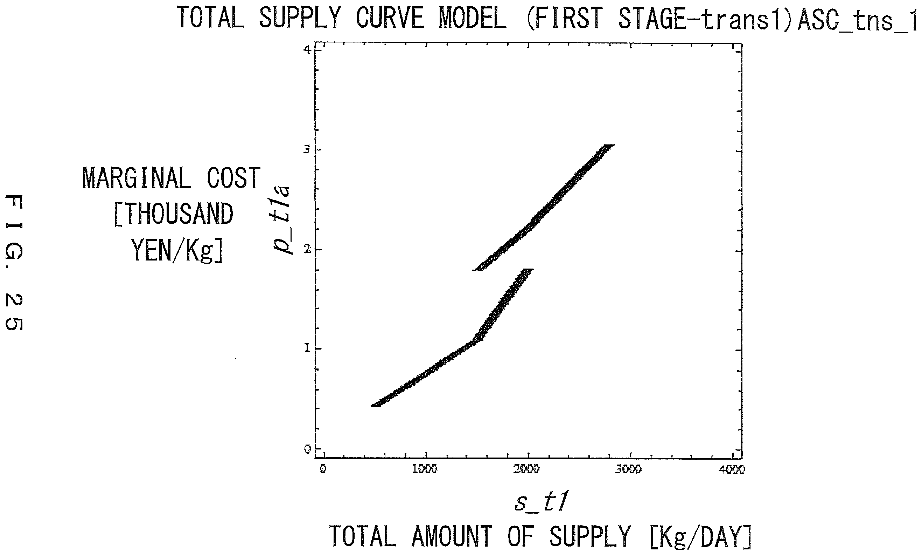

FIG. 25 illustrates total supply curve model ASC_tns_1 representing a relationship between the amount of supply of items supplied from circulation base trans1 to store demand1 and a marginal cost. The horizontal axis represents amount of supply s_t1 [kg/day] of items while the vertical axis represents marginal cost p_t1a [thousands of yen/kg].

As described in the explanations in FIG. 22, with respect to the supply of items from circulation base trans1 to store demand1, the total amount of items supplied respectively from two factories supply2 and supply3 to circulation base trans1 is supplied. When the items pass through circulation base trans1, an additional cost for delivering the items is added in circulation base trans1. Accordingly, the total supply curve model ASC_tns_1 illustrated in FIG. 25 can be obtained by synthesizing the supply curve models of two factories supply2 and supply3 that supply items to circulation base trans1 and the supply curve model of correct trans1 in the above described method.

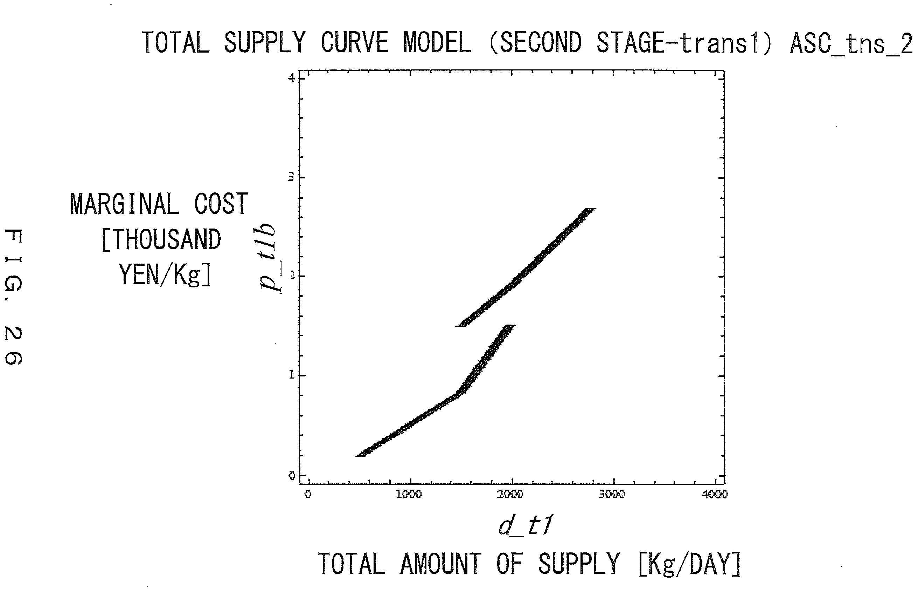

FIG. 26 illustrates total supply curve model ASC_tns_2, which represents a relationship between the amount of supply of items supplied from two factories supply2 and supply3 to circulation base trans1 and a marginal cost. The horizontal axis represents amount of supply p_t1 [kg/day] of items while the vertical axis represents marginal cost p_t1b [thousands of yen/kg].

Total supply curve model ASC_tns_2 illustrated in FIG. 26 can be obtained by synthesizing the supply curve models of two factories supply2 and supply3 in the above described method.

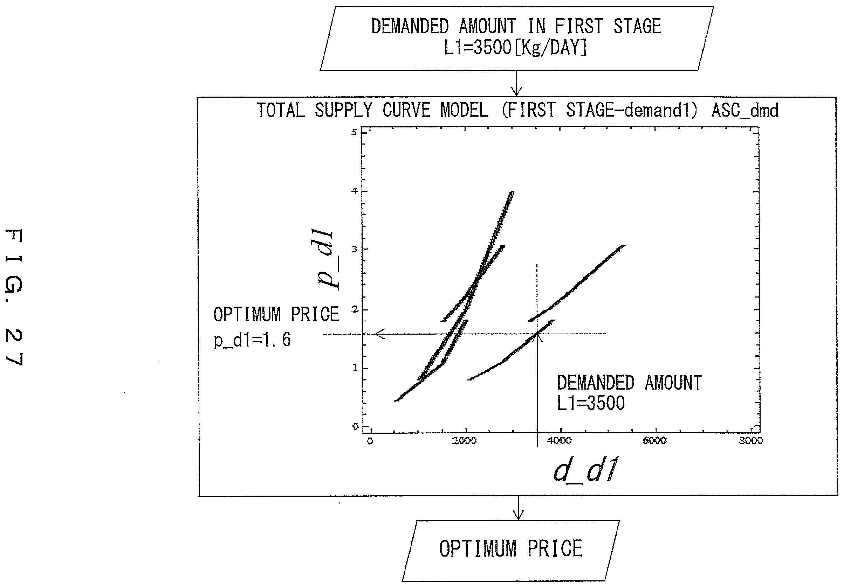

By referring to FIG. 27 through FIG. 30, explanations will be given for a method of determining the distribution of the amount of production to each producer in a case in which items, which are products, are supplied to store demand1, which is a demander, in a plurality of stages as in the present example, by using the supply curve models ilustrated in FIG. 23 through FIG. 26.

FIG. 27 illustrates a process of determining optimum price p_d1 in the first stage supply from total supply curve model ASC_dmd illustrated in FIG. 24 in the present example.

In the present example, demanded amount L1 of items given to the optimum production-distribution determination apparatus 1, i.e. , the amount of items demanded by store demand1 is L1=3500 [kg/day]. Then, the marginal cost for supplying the items of L1=3500[kg/day] is 1.6[thousand yen/kg] from total supply curve model ASC_dmd to store demand1 shown in FIG. 27. Accordingly, the optimum price search unit 12 sets optimum price p_d1 in the supply of items to first stage store demand1 so that p_d1=1.6, in step 123 of the plural-stage optimum production-distribution determination program 120 illustrated in FIG. 21.

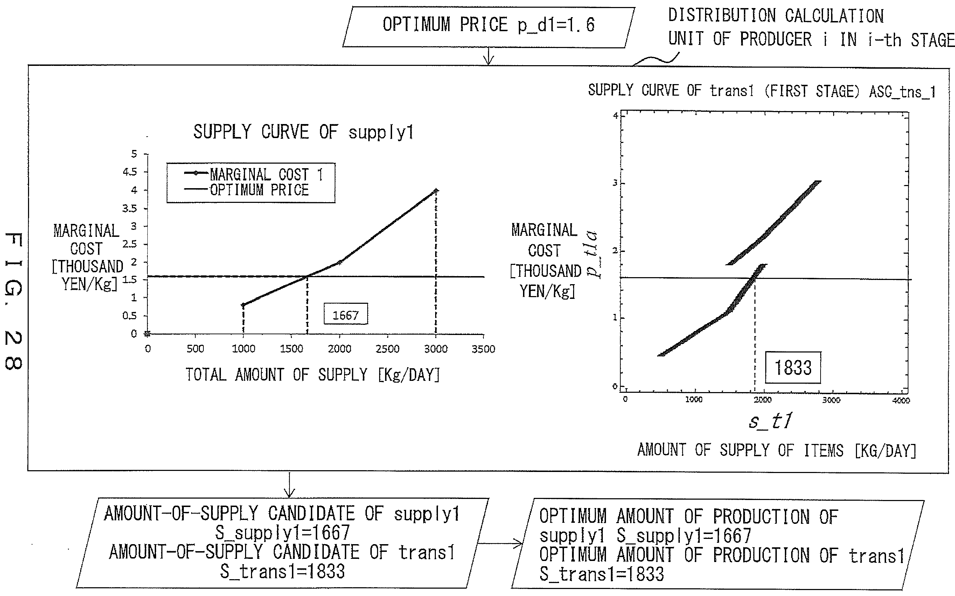

FIG. 28 illustrates a method of determining a distribution candidate for each of circulation base trans1 and factory supply1 that supply items to store demand1.

In step 123 of the plural-stage optimum production-distribution determination program 120, the each-producer distribution calculation unit 13 determines the distribution candidate of the first (i=1) producer by using a method similar to that described in the explanation for the first embodiment. In the present example, the each-producer distribution calculation unit 13 determines the amount-of-supply candidates (distribution candidates) of circulation bases trans1 and factory supply1, which are the first (i=1) producers, on the basis of optimum price p_d1 determined by the optimum price search unit 12.

First, regarding factory supply1, when the supply curve model of supply1 in FIG. 23 (a) is referred to, the marginal cost matching optimum price p_d1=1.6 exists. Then, in accordance with distribution determination method B of FIG. 8, amount-of-supply candidate S_supply1 of items is determined so that S_supply1=1667[kg/day]. Similarly, regarding circulation base trans1 as well, amount-of-supply candidate S_trans1 of items is determined so that S_trans1=1833[kg/day] in accordance with the distribution determination method B. The amount-of-supply candidate of circulation base trans1 is determined by using total supply curve model ASC_tns_1 of FIG. 25.

As explained in the first embodiment, it is determined whether or not supply-demand balance Δ has been realized from the obtained distribution candidate and the production combination of respective producers. Then, the distribution for each producer in the supply in the first stage can be determined to be 1667[kg/day] for factory supply1 and 1833[kg/day] for circulation base trans1.

From among the producers for which the amounts of supply have been determined, there is no producer who supplies items to factory supply1. By contrast, two factories supply2 and supply3 are supplying items to circulation base trans1. Accordingly, it is needed to further determine the distribution of the amount of production in the second stage for two factories supply2 and supply3, i.e., the distribution of the amount of production of items to circulation base trans1.

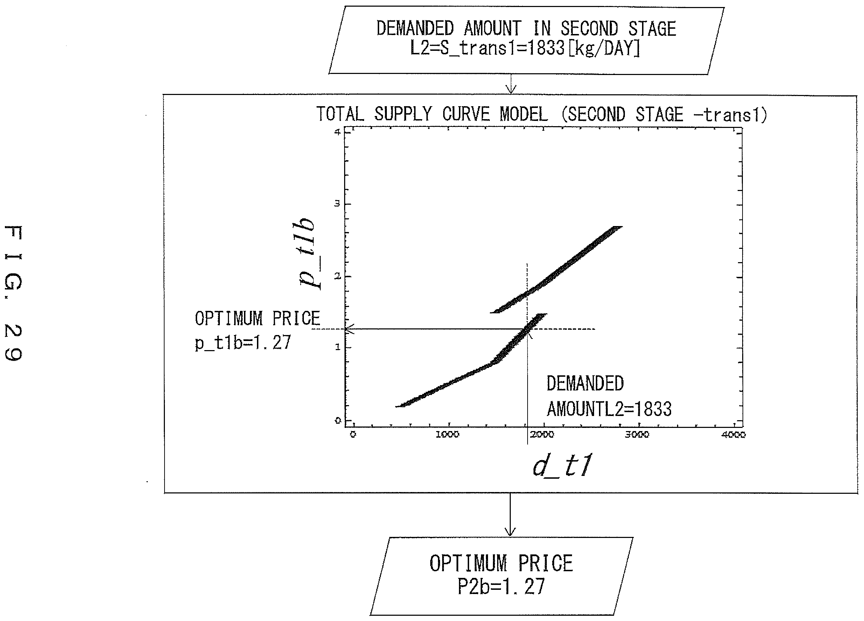

FIG. 29 explains a process of determining optimum price p_t1b in the supply in the second stage from total supply curve model ASC_tns_2 of FIG. 26 in the present example.

In the present example, optimum price d_t1b is determined in accordance with demanded amount L2 of items in the second stage. As described in FIG. 29, demanded amount L2 of items of circulation base trans1 is L2=S_trans1=1833 [kg/day]. The marginal cost when the items of L2=1833[kg/day] is 1.27 [thousand yen/kg] from total supply curve model ASC_tns_2 to circulation base trans1 in FIG. 29. Accordingly, in step 123 of the plural-stage optimum production-distribution determination program 120 illustrated in FIG. 21, the optimum production-distribution determination apparatus 1 makes the optimum price search unit 12 determine optimum price p_t1b in the supply of items to circulation base trans1 in the second stage so that p_t1b=1.27.

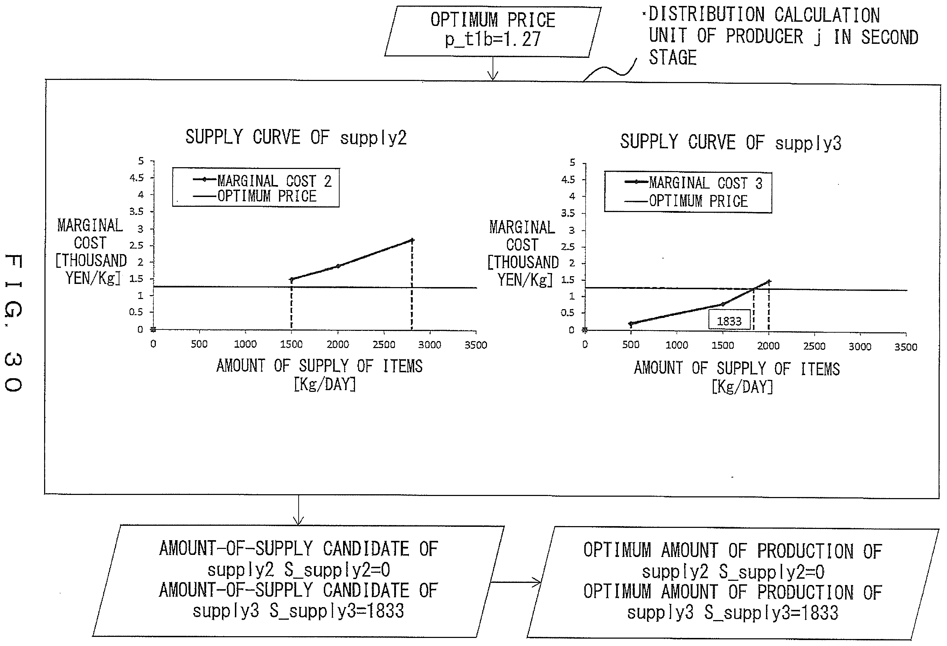

FIG. 30 illustrates a method of determining a distribution candidate for each of two factories supply2 and supply3 that supply items to circulation base trans1.

In step 123 of the plural-stage optimum production-distribution determination program 120, the each-producer distribution calculation unit 13 determines a distribution candidate of producer in the second (i=2) stage. In the present example, on the basis of optimum price p_t1b in the supply in the second stage determined in the optimum price search unit 12, the each-producer distribution calculation unit 13 determines the amount-of-supply candidates (distribution candidates) of two factories supply2 and supply3, which are producers in the second (i=2) stage.

The method of determining the amount-of-supply candidates (distribution candidates) from the supply curve model of each producer and the determined optimum price is as explained before, and thus will not be explained in detail. For factory supply2, because optimum price p_t1b is lower than the lower limit of the marginal cost, amount-of-supply candidate S_supply2=0[kg/day] is obtained. For factory supply3, because optimum price p_t1b is within the range between the upper and lower limits of the marginal cost, amount-of-supply candidate S_supply3=1833[kg/day] is obtained.

For the amount-of-supply candidate in the second stage as well, it is determined whether or not the supply-demand balance is realized from the production combination of respective producers, similarly to the first stage. Thereby, the distribution for each of the producers in the supply in the second stage can be determined to be 0 [kg/day] (not produced) for factory supply2 and 1833[kg/day] for factory supply3.

For both of factories supply2 and supply3 that conduct supply in the second stage, the distribution of production (supply) is determined for all producers in the above process because these producers will not become demanders to further receive the supply of items from other producers. Then, the plural-stage optimum production-distribution determination program 120 terminates the process.

As described above, the optimum production-distribution determination apparatus 1 according to the present embodiment makes it possible to optimize the distribution of the amount of production of each producer for a system in which the production and supply are conducted in a plurality of stages, similarly to a system in which the production and supply are conducted in a single stage as described above.

<Fourth embodiment>

In the explanations of the above embodiments, it is described that the total supply curve calculation unit 11 synthesizes supply curve models of respective producers so as to obtain a total supply curve model. In the present embodiment, specific explanations will be given for how to calculate a total supply curve model from the supply curve models of respective producers.

Hereinafter, detailed explanations will be given for a calculation method of a total supply curve model in the present embodiment. Note that explanations will be omitted for configurations etc. of the optimum production-distribution determination apparatus 1 that executes the calculation method of a total supply curve model that will be explained below because it is similar to those in the above embodiments.

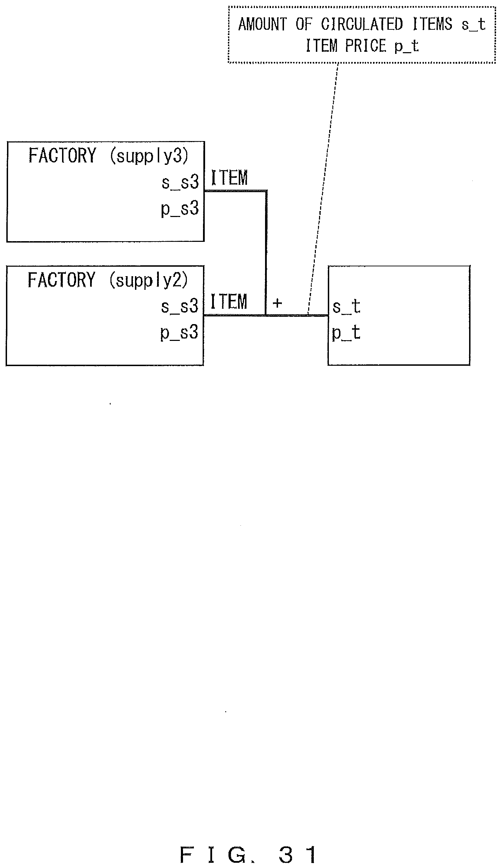

FIG. 31 exemplifies a configuration of a production and circulation base for which optimization is conducted in the present embodiment. Part of the configuration of FIG. 22 that was referred to in the third embodiment corresponds to the configuration illustrated in FIG. 31.

Two factories supply2 and supply3 produce items and the produced items are gathered in one place. Costs are imposed on respective factories in accordance with the amounts to be produced. It is assumed that the amount of items produced and supplied by factory supply2 is s_s2 and the marginal cost is p_s2 and that the amount of items produced and supplied by factory supply3 is s_s3 and the marginal cost is p_s3.

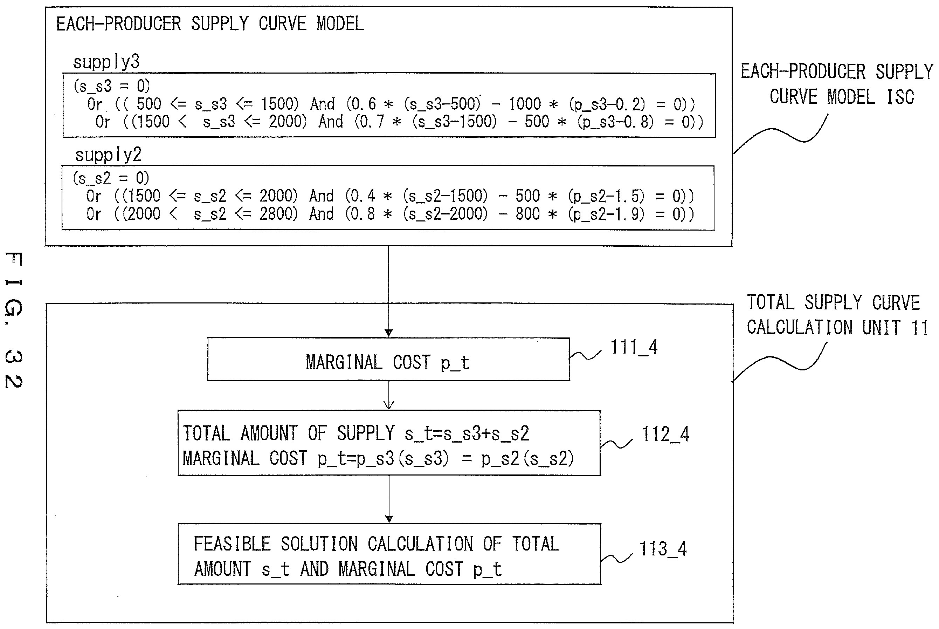

FIG. 32 through FIG. 34 explain a process in which the total supply curve calculation unit 11 of the optimum production-distribution determination program 100 calculates total supply curve model ASC in the present embodiment.

FIG. 32 gives detailed explanations for the operation of the total supply curve calculation unit 11 according to the present embodiment.

In the present embodiment, the supply curve model of each producer is given in a form of a logical formula. When the amount of supply of items is s_s3 and the marginal cost is p_s3 as described above, the logical formula for factory supply3 is given in the form below.

$$(s\_s3=0)$$

Or((500<=s_s3<=1500)And(0.6*(s_s3-500)-1000*(p_s3-0.2)=0))          Or((1500<s_s3<=2000)And(0.7*(s_s3-1500)-500*(p_s3-0.8)=0))

When the amount of supply of items is s_s2 and the marginal cost is p_s2 as described above, the logical formula for factory supply2 is given in the form below.

$$(s\_s2=0)$$

Or((1500<=s_s2<=2000)And(0.4*(s_s2-1500)-500*(p_s2-1.5)=0))        Or((2000<s_s2<=2800)And(0.8*(s_s2-2000)-800*(p_s2-1.9)=0))

When the supply curve model ISC of each producer is given, the optimum production-distribution determination apparatus 1 executes the optimum production-distribution determination program 100. As explained by referring to FIG. 3, amount of supply s_t and marginal cost p_t meet the conditions below (step 112_4) when the marginal cost on a supply curve is p_t (step 111_4 in FIG. 32) and the total amount of supply is s_t. Total amount of supply:

$$s\_t=s\_s3+s\_s2$$

Marginal cost:

$$p\_t=p\_s3(s\_s3)=p\_s2(s\_s2)$$

For example, in the formula satisfied by above marginal cost p_t, "p_s3(s_s3)" is marginal cost p_s3 when the amount of supply of factory supply3 is s_s3.

Then, the total supply curve calculation unit 11 calculates a feasible solution of total amount of supply s_t and marginal cost p_t, so as to obtain total supply curve model ASC (step 113_4).

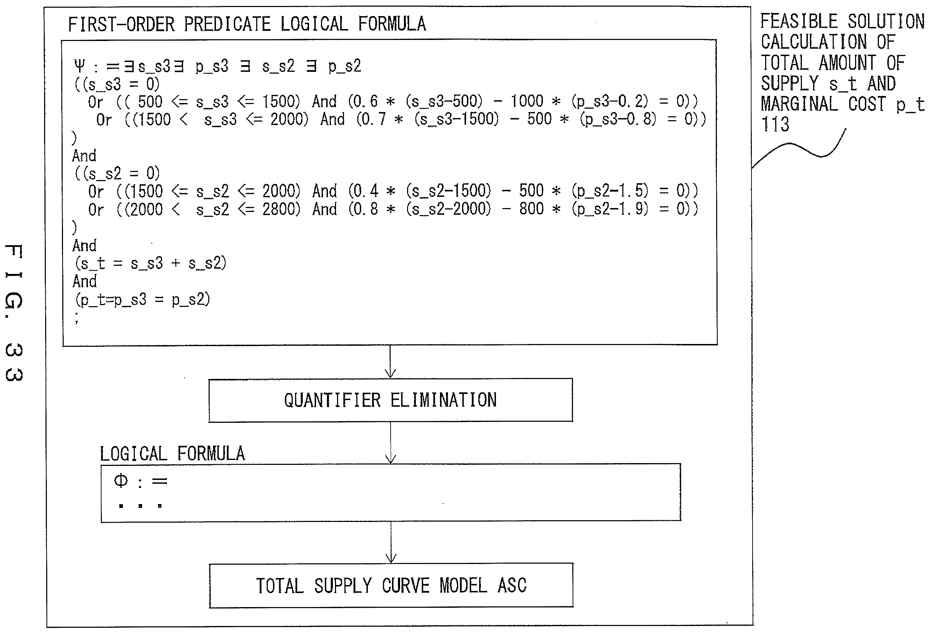

FIG. 33 illustrates, in detail, step 113_4 in FIG. 32, i.e., a process of calculating a feasible solution of total amount of supply s_t and marginal cost p_t.

The total supply curve calculation unit 11 connects, by logical sum, a relational expression that is to be satisfied by total amount of supply s_t and marginal cost p_t explained by referring to FIG. 32 and two logical formulas related to two factories supply3 and supply2 explained by referring to FIG. 32 similarly. For variables s_s3, p_s3, s_s2, and p_s2, existential quantifier (∃) is added so as to define first-order predicate logical formula Ψ.

[Formula 3]

$$\Psi := \exists s\_s3 \exists p\_s3 \exists s\_s2 \exists p\_s2$$

$$((s\_s3 = 0)$$

$$Or((500 <= s\_s3 <= 1500) And (0.6*(s\_s3 - 500) - 1000*(p\_s3 - 0.2) = 0))$$

$$Or((1500 < s\_s3 <= 2000) And (0.7*(s\_s3 - 1500) - 500*(p\_s3 - 0.8) = 0))$$

$$)$$

$$And$$

$$((s\_s2 = 0)$$

$$Or((1500 <= s\_s2 <= 2000) And (0.4*(s\_s2 - 1500) - 500*(p\_s2 - 1.5) = 0))$$

$$Or((2000 < s\_s2 <= 2800) And (0.8*(s\_s2 - 2000) - 800*(p\_s2 - 1.9) = 0))$$

$$)$$

$$And$$

$$(s\_t = s\_s3 + s\_s2)$$

$$And$$

$$(p\_t = p\_s3 = p\_s2)$$

$$;$$

The total supply curve calculation unit 11 applies quantifier elimination to first-order predicate logical formula $\Psi$ so as to obtain logical formula $\Phi$. Logical formula $\Phi$ that is obtained is total supply curve model ASC.

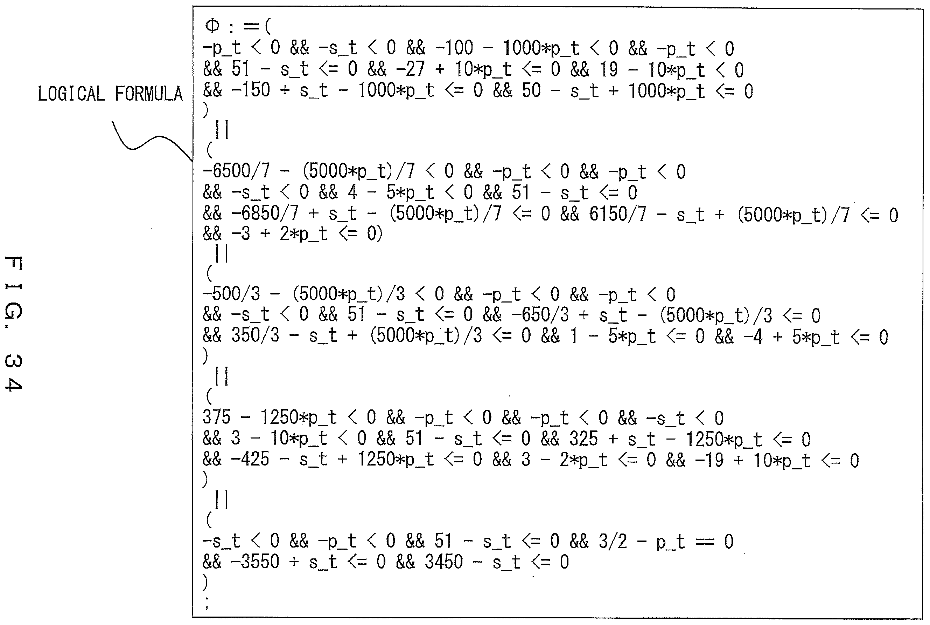

FIG. 34 illustrates logical formula $\Phi$ obtained in the present example.

As illustrated as logical formula $\Phi$ exemplified in FIG. 34, the formula obtained by applying quantifier elimination to first-order predicate logical formula $\Psi$ is obtained in a form of a logical formula that is to be satisfied by total amount of supply s_t and marginal cost p_t. When logical formula $\Phi$ of FIG. 34 is expressed in a form of a graph with the horizontal axis representing total amount of supply s_t and the vertical axis representing marginal cost p_t, it matches total supply curve model ASC_tns_2 of FIG. 26 used for the explanations of the above third embodiment.

Total supply curve model ASC expressed by logical formula $\Phi$ of FIG. 34 obtained by the total supply curve calculation unit 11 through the above calculation is used by the optimum price search unit 12 for searching for the optimum price as described in the above embodiment. Specifically, marginal cost p_t corresponding to total amount of supply s_t matching a given demanded amount is obtained through logical formula $\Phi$ and the obtained marginal cost is treated as the optimum price.

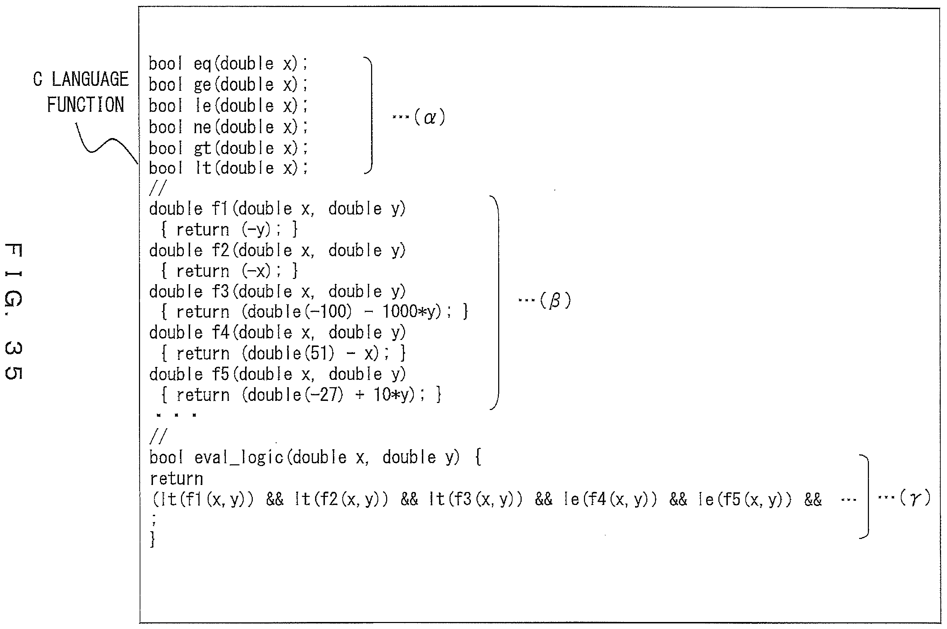

FIG. 35 illustrates an example in which logical formula $\Phi$ of FIG. 34 is expressed by C language, which is a software development language. Logical formula $\Phi$ is expressed with x representing variable s_t that expresses the total amount of supply in FIG. 34 and y representing variable p_t that expresses the marginal cost.

Boolean operators appearing in ($\alpha$) in FIG. 35 indicate that double type variables x are equal to (eq), equal to or greater than (ge), equal to or less than (le), not equal to (ne), greater than (gt), and smaller than (lt) a value in order from the top. Also, f1, f2,.. correspond to the left-hand members of the equations and inequalities in logical formula $\Phi$ in FIG. 34 as described in comment statements ($\beta$) in FIG. 35. For example, the equations below are satisfied.

```
f1=-y
f2=-x
f3=-100-1000*y
```

Thereby, when variable (x, y) satisfies logical formula $\Phi$, the return value of function bool eval_logic illustrated in ($\gamma$) of FIG. 35 is true and when it does not satisfy the formula, the return value is false. Accordingly, it is possible to determine whether or not a combination of total amount of supply s_t and marginal cost p_t (a given variable (x, y)) satisfies logical formula $\Phi$ of FIG. 34 by referring to function bool eval_logic of FIG. 35, and also to conduct a search etc. for the optimum price by using this in a simple manner.

<Fifth embodiment>

In the above fourth embodiment, a total supply curve model is calculated from the supply curve model of each producer for a system in which a plurality of producers supply products to a demander. In the present embodiment, a total supply curve model is calculated from the supply curve model of each producer for a system in which products are supplied in a plurality of stages as exemplified in the third embodiment.

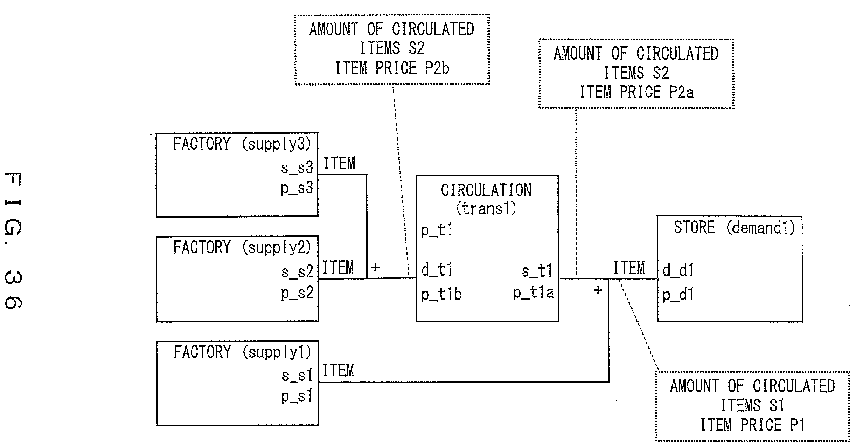

FIG. 36 exemplifies a configuration of a production and circulation base of items for which the optimum production-distribution determination apparatus 1 according to the present embodiment conducts optimization. Because the configuration of the product and circulation base illustrated in FIG. 36 is similar to that illustrated in FIG. 22, which was used in the explanations of the third embodiment, detailed explanations thereof will be omitted here.

Note that in the above fourth embodiment, explanations were given for a calculation method of a total supply curve model for the supply of items to circulation base trans1 in the configuration illustrated in FIG. 36. In this example, explanations will be given for a calculation method of a total supply curve model for the supply of items to store demand1.

As described in the explanations for the third embodiment above, a total supply curve model representing a relationship between the amount of supply of items supplied to store demand1 and the marginal cost is obtained by synthesizing the supply curve models of producers (factories supply1 through supply3 and circulation base trans1).

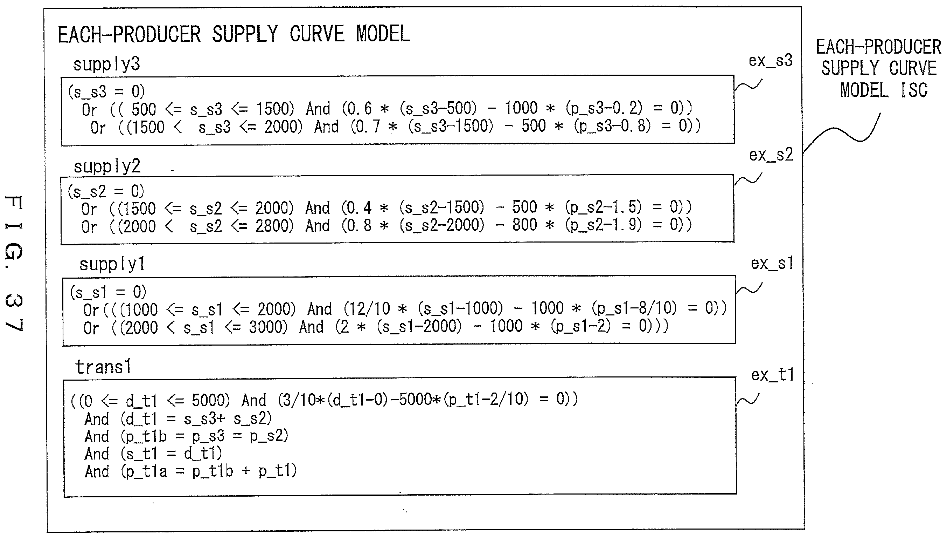

FIG. 37 illustrates a supply curve model of each producer expressed by a logical formula. From the top of FIG. 37, logical formula ex_s3 expressing the supply curve model of factory supply3, logical formula ex_s2 of factory supply2, logical formula ex_s1 of factory supply1, and logical formula ex_t1 of circulation base trans1 are described.

From among these logical formulas, logical formulas ex_s3 and ex_s2 for factories supply3 and supply2 are as described in the fourth embodiment by referring to FIG. 32. Also, regarding logical formula ex_s1 of the supply curve model of factory supply1, a formula illustrated in FIG. 37 is given similarly by treating s_s1 and p_s1 as the amount of supply of items and the marginal cost, respectively, and accordingly the explanations thereof will be omitted.

For logical formula ex_t1 of circulation base trans1, the amount of supply of items from supply3 between two factories supply3 and supply2 is treated as s_s3 and the amount of supply of items from supply2 is treated as s_s2. This is similar to the fourth embodiment. Also, it is assumed in this example that the marginal cost added to items supplied from supply3 and supply2 in circulation base trans1 is p_t1, the marginal cost of supply from supply3 and supply2 is p_t1b, and the marginal cost of supply from circulation base trans1 to store demand1 is p_t1a.

Also, a relationship realized in circulation base trans1 is expressed by a logical formula. Specifically, (1) limitations of upper and lower limits of demanded amount d_t1 to supply3 and supply2, (2) a linear relationship between d_t1 and marginal cost p_t1 that is added, (3) a relationship in which d_t1 is equal to the sum of the amounts of supply s_s3 and s_s2 from supply3 and supply2, (4) a equality relationship between marginal cost p_t1b of items supplied from supply3 and supply2 and marginal costs p_s3 and p_s2 in supply3 and supply2, (5) a equality relationship between amount of supply s_t1 to store demand1 and demanded amount d_t1 to factories supply3 and supply2 and (6) a relationship in which marginal cost p_t1a of supply to store demand1 is equal to the sum of marginal cost p_t1b imposed on supply3 and supply2 supplying items to circulation base trans1 and marginal cost p_t1 added in circulation base trans1 are expressed by the logical formulas below.

$$((0<d\_t1<=5000)$$

And(3/10*(d_t1-0)-5000*(p_t1-2/10))
And(d_t1=s_s3+s_s2)
And(p_t1b=p_s3=p_s2)
And(s_t1=d_t1)
And(p_t1a=p_t1b+p_t1)

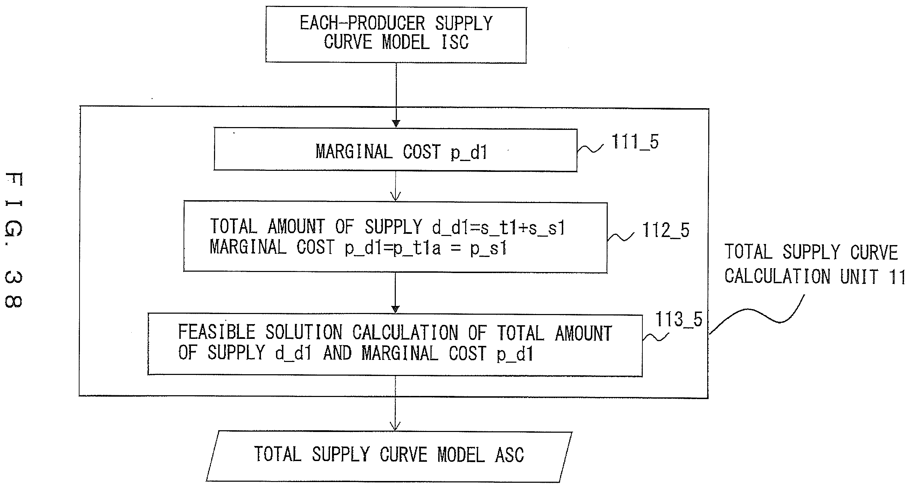

FIG. 38 illustrates, in detail, operations of the total supply curve calculation unit 11 according to the present embodiment. The logical formula expressing the supply curve model of each producer that is input is as illustrated in FIG. 37.

As illustrated in FIG. 38, when the marginal cost on the total supply curve in the first stage is p_d1 (step 111_5) and the amount of supply of items, i.e., the total amount of supply is d_d1, total amount of supply d_d1 and marginal cost p_d1 meet the conditions below (step 112_5). Total amount of supply:

$$d\_d1=s\_t1+s\_s1$$

Marginal cost:

```
p_d1=p_t1a=p_s1
```

Then, the total supply curve calculation unit 11 calculates a feasible solution of total amount of supply d_d1 and marginal cost p_d1 so as to obtain the total supply curve model (113_5).

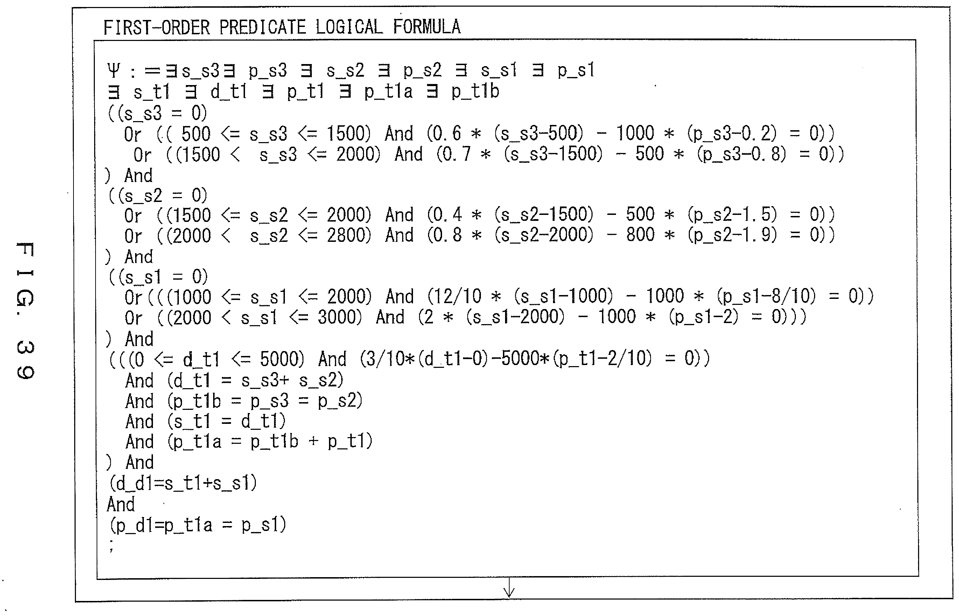

FIG. 39 illustrates step 113_5 of FIG. 38 in detail, i.e., a process of calculating a feasible solution of total amount of supply d_d1 and marginal cost p_d1.

Similarly to the fourth embodiment above, the total supply curve calculation unit 11 connects the relational expression that is to be satisfied by total amount of supply d_d1 and marginal cost p_d1 in FIG. 38 and the logical formulas in FIG.37 related to factories supply3 through supply1 and circulation base trans1, by using the logical formula. Then, for variables s_s3, p_s3, s_s2, p_s2, s_s1, p_s1, s_t1, d_t1, p_t1, p_t1a, and p_t1b, existential quantifier (3) is added and first-order predicate logic formula Ψ is defined. Detailed aspects of first-order predicate logic formula Ψ are as illustrated in FIG. 39 and part of the description thereof will be omitted in this example.

[Formula 4]

$$\Psi := \exists s\_s3 \exists p\_s3 \exists s\_s2 \exists p\_s2 \exists s\_s1 \exists p\_s1$$

$$\exists s\_t1 \exists d\_t1 \exists p\_t1 \exists p\_t1a \exists p\_t1b$$

$$((s\_s3 = 0)$$

$$Or((500 <= s\_s3 <= 1500)And(0.6*(s\_s3 - 500) - 1000*(p\_s3 - 0.2) = 0))$$

$$Or((1500 < s\_s3 <= 2000)And(0.7*(s\_s3 - 1500) - 500*(p\_s3 - 0.8) = 0))$$

$$)And$$

$$((s\_s2 = 0)$$

$$Or((1500 <= s\_s2 <= 2000)And(0.4*(s\_s2 - 1500) - 500*(p\_s2 - 1.5) = 0))$$

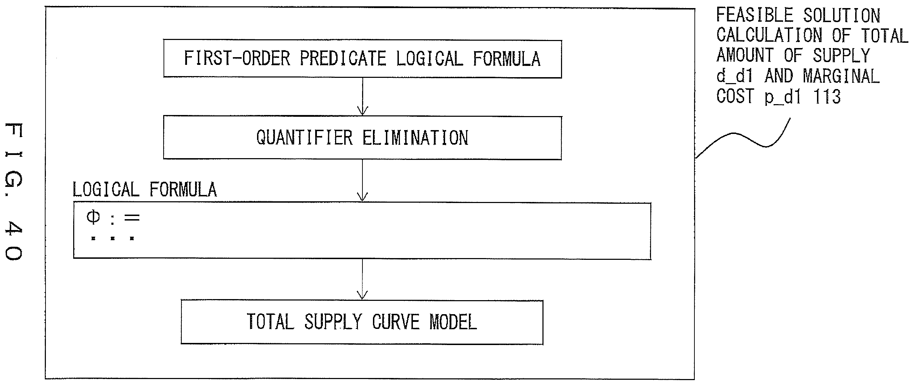

FIG. 40 illustrates, in detail, step 113_5 of FIG. 38, i.e., a process of calculating a feasible solution of total amount of supply d_d1 and marginal cost p_d1, and explains a process after the defining of first-order predicate logic formula Ψ in FIG. 39.

After defining first-order predicate logic formula Ψ in the above method, the total supply curve calculation unit 11 executes a process similar to the fourth embodiment above. Specifically, quantifier elimination is applied to first-order predicate logic formula Ψ so as to obtain logical formula Φ. Logical formula Φ that is obtained is total supply curve model ASC_dmd.

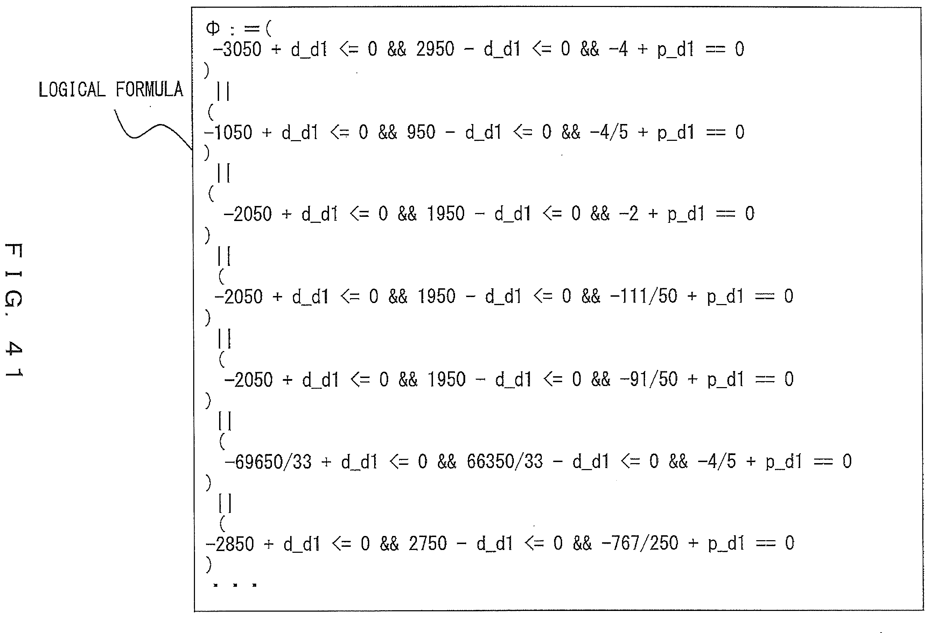

FIG. 41 illustrates logical formula Φ obtained in the present example. As illustrated in FIG. 41, logical formula Φ is obtained in a form of logical formula that is to be satisfied by total amount of supply d_d1 and marginal cost p_d1 respectively.

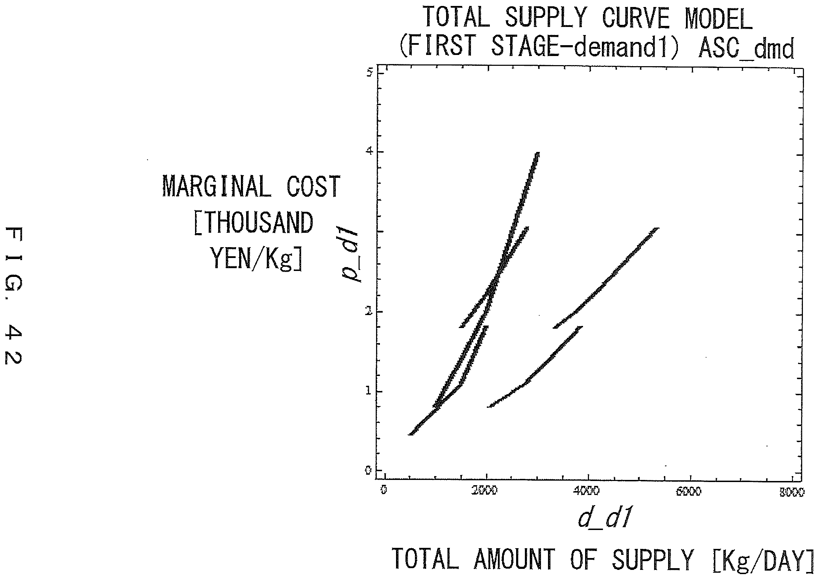

FIG. 42 illustrates visualization of the logical formula Φ of FIG. 41 in a form of a graph. The horizontal axis represents total amount of supply d_d1 [kg/day] while the vertical axis represents marginal cost p_d1 [thousands of yen/kg]. This matches total supply curve model ASC_dmd of FIG. 24 used in the explanation of the above third embodiment.

Note that a total supply curve model representing a relationship between an amount of supply of items supplied from circulation base trans1 to store demand1 and a marginal cost can also be obtained through calculations by using a method similar to the above. Specifically, a formula satisfied by total amount of supply s_t and marginal cost p_t1a is prepared, in which the marginal cost is represented by p_t1a and the total amount of supply of items is represented by s_t1, a feasible solution of total amount of supply s_t1 and marginal cost p_t1a is calculated, and total supply curve model ASC_tns_1 is obtained. In calculations of a feasible solution of total amount of supply s_t1 and marginal cost p_t1a, a relationship, such as a fact that a sum of the amount of supply of items from factories supply3 and supply2 to circulation base trans1 is equal to s_t1, satisfied in circulation base trans1 is expressed as a logical formula. Then, these are combined by a logical sum, existential quantifier (∃) is added to a variable that is to be eliminated, and first-order predicate logic formula Ψ is generated. By applying quantifier elimination to generated first-order predicate logic formula Ψ, logical formula Φ, i.e., total supply curve model ASC_tns_1 is obtained.

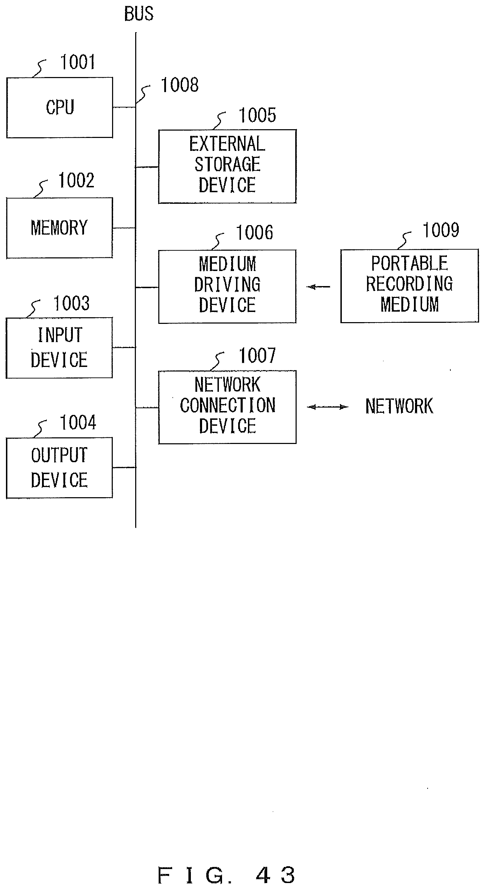

Incidentally, the optimum production-distribution determination apparatus 1 of FIG. 1 can be configured by using for example an information processing apparatus (computer) such as is illustrated in FIG. 43. The information processing apparatus illustrated in FIG. 43 includes a Central Processing Unit (CPU) 1001, a memory 1002, an input device 1003, an output device 1004, an external storage device 1005, a medium driving device 1006, and a network connection device 1007, and these constituents are connected to each other via a bus 1008.

The memory 1002 is for example a Read Only Memory (ROM), a Random Access Memory (RAM), etc., and stores a program and data used for the processes. The CPU 1001 executes a program by using the memory 1002 so as to execute necessary processes.

As described above, from among the programs related to the present embodiment illustrated in FIG.2, FIG. 19, and FIG. 21 executed by the optimum production-distribution determination apparatus 1 of FIG. 1, the total supply curve calculation unit 11, the optimum price search unit 12, the each-producer distribution calculation unit 13, and the stage distribution control unit 10 correspond to the functions implemented by the CPU 1001 reading and executing a program stored in the memory 1002. Each-producer supply curve model ISC, total supply curve model ASC, optimum price $\lambda$, and an amount of production of each producer correspond to data stored in the memory 1002.

The input device 1003 is for example a keyboard, a pointing device, a touch panel etc., and is used for inputting instructions or information from the user. The output device 1004 is for example a display device, a printer, a speaker, etc., and is used for outputting process results etc.

The external storage unit 1005 is for example a magnetic disk device, an optical disk device, a magneto-optical disk device, a tape device, etc. The information processing apparatus stores the above programs and data in the external storage unit 1005 beforehand so as to load them onto the memory 1002 and use them on an as-needed basis.

The medium driving device 1006 drives a portable recording medium 1009 so as to access information recorded in it. The portable recording medium 1009 is an arbitrary computer-readable recording medium such as a memory card, a flexible disk, a Compact Disk Read Only Memory (CD-ROM), an optical disk, a magneto-optical disk, etc. The user of the optimum production-distribution determination apparatus 1 stores the above program and data in the portable recording medium 1009 beforehand so as to load them onto the memory 1002 and use them on an as-needed basis.

The network connection device 1007 is connected to an arbitrary communication network such as a Local Area Network (LAN), the Internet, etc. so as to perform the conversion of data used for communications. The information processing apparatus receives the above program and data from an external device via the network connection device 1007 so as to load them onto the memory 1002 and use them on an as-needed basis.

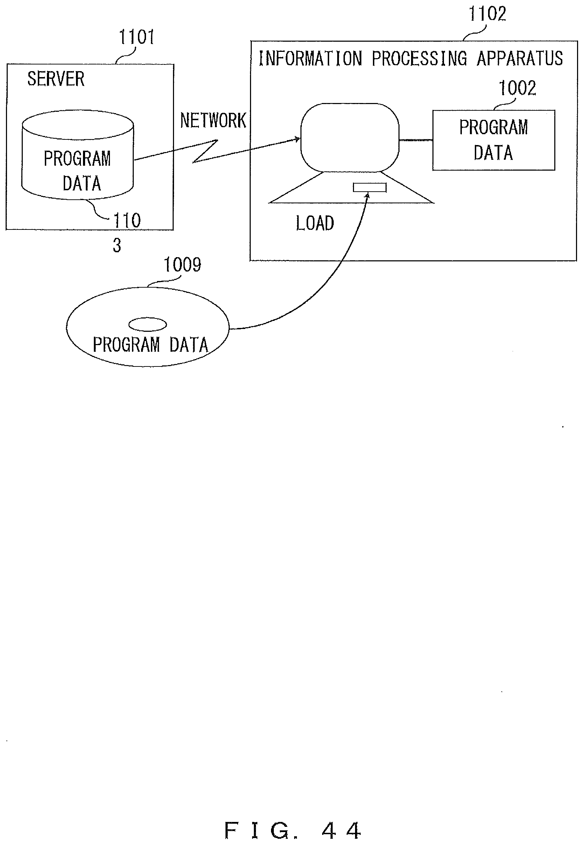

FIG. 44 illustrates a computer-readable recording medium that can supply a program and data to the information processing apparatus of FIG. 43. A program and data stored in the portable recording medium 1009 and a database 1103 of a server 1101 is loaded onto the memory 1002 of an information processing apparatus 1102. The server 1101 generates a carrier wave for carrying the program and data so as to transmit it to the information processing apparatus 1102 via an arbitrary transmission medium on the network. The CPU 1001 uses that data to execute the program, and performs necessary processes.

The present invention is not limited to the above embodiments as they are, and can be embodied by altering constituents without departing from the spirit of the invention in implementation phases. Also, an appropriate combination of a plurality of constituents disclosed in the above embodiments can form various inventions. For example, all the constituents described in the embodiments may be combined appropriately. Further, constituents of different embodiments may be combined appropriately. Needless to say, various alterations and applications are possible without departing from the spirit of the invention.

## Claims

1. An optimum production-distribution determination method that determines optimum distribution of an amount of production to a plurality of producers, the method comprising:

   including each-producer supply curve models that represent a relationship between an amount of supply of each producer and a marginal cost and a total supply curve model that is obtained by synthesizing the each-producer supply curve models, and determining an optimum price from the total supply curve model in accordance with a given demanded amount;

   determining an amount-of-production candidate of each producer on the basis of the each-producer supply curve models and the determined optimum price;

   adjusting a production combination that represents whether or not each of the plurality of producers conducts production so that a sum of amounts of production of respective producers and the given demanded amount match; and

   determining distribution of an amount of production of each producer on the basis of the production combination and the amount-of-production candidate.

2. The optimum production-distribution determination method according to claim 1, wherein

when distribution of an amount of production of each of the producers is determined in a system in which products for which distribution is conducted are produced in a plurality of stages, a process of determining, after distribution for each producer is determined in one stage, distribution for each producer in a stage subsequent to the one stage on the basis of the distribution is repeated sequentially so as to determine distribution of an amount of production of each producer in the plurality of stages.

3. The optimum production-distribution determination method according to claim 2, wherein
in the one stage, distribution to a first producer supplying products to a demander that receives a supply of the products in the end is determined, and in a stage subsequent to the one stage, distribution to a second producer supplying products to the first demander is determined.

4. The optimum production-distribution determination method according to any one of claims 1 through 3, wherein
in a process of calculating the total supply curve model, a total supply curve model expressed by a logical formula is obtained by using a first-order predicate logic formula and quantifier elimination.

5. The optimum production-distribution determination method according to claim 1, wherein
a step of determining distribution of an amount of production of each of the producers is visualized by using the total supply curve model and the each-producer supply curve models.

6. An optimum production-distribution determination program that causes a computer to execute a process of determining optimum distribution of an amount of production to a plurality of producers, the program comprising:

calculating a total supply curve model that represent a relationship between a total amount of supply and a marginal cost by synthesizing each-producer supply curve models that represent a relationship between an amount of supply of each producer and a marginal cost when the each-producer supply curve models are input,;
determining an optimum price on the basis of the total supply curve model in accordance with a given demanded amount;
determining an amount-of-production candidate of each producer on the basis of the each-producer supply curve models and the determined optimum price;
adjusting a production combination that represents whether or not each of the plurality of producers conducts production so that a sum of amounts of production of respective producers and the given demanded amount match; and
determining distribution of an amount of production of each producer on the basis of the production combination and the amount-of-production candidate.

7. The optimum production-distribution determination program according to claim 6, wherein
the optimum production-distribution determination program is configured by being separated into:

a total supply curve calculation program that calculates the total supply curve model; and
an amount-of-production distribution calculation program that determines distribution of an amount of production of each producer by using the total supply curve model generated by the total supply curve calculation program, and
the amount-of-production distribution calculation program executes a process of determining distribution of an amount of production of each producer from the input total supply curve model and the given demanded amount.

8. The optimum production-distribution determination program according to claim 6 or 7, wherein
when distribution of an amount of production of each of the producers is determined in a system in which products for which distribution is conducted are produced in a plurality of stages, a process of determining, after distribution for each producer is determined in one stage, distribution for each producer in a stage subsequent to the one stage on the basis of the distribution is repeated sequentially so as to determine distribution of an amount of production of each producer in the plurality of stages.

9. The optimum production-distribution determination program according to claim 8, wherein
in the one stage, distribution to a first producer supplying products to a demander that receives supply of the products in the end is determined, and in a stage subsequent to the one stage, distribution to a second producer supplying products to the first demander is determined.

10. The optimum production-distribution determination program according to any one of claims 6 through 9, wherein

in a process of calculating the total supply curve model, a total supply curve model expressed by a logical formula is obtained by using a first-order predicate logic formula and quantifier elimination.

11. The optimum production-distribution determination program according to claim 6 or 7, wherein a step of determining distribution of an amount of production of each of the producers is visualized by using the total supply curve model and the each-producer supply curve models.

12. An optimum production-distribution determination apparatus that determines optimum distribution of an amount of production to a plurality of producers, the apparatus comprising:

a total supply curve calculation unit that calculates, when each-producer supply curve models that represent a relationship between an amount of supply of each producer and a marginal cost are input, a total supply curve model representing a relationship between a total amount of supply and a marginal cost by synthesizing the each-producer supply curve models;
an optimum price search unit that determines an optimum price on the basis of the total supply curve model in accordance with a given demanded amount; and
an each-producer distribution calculation unit that determines an amount-of-production candidate of each producer on the basis of the each-producer supply curve models and the determined optimum price, adjusts a production combination that represents whether or not each of the plurality of producers conducts production so that a sum of amounts of production of respective producers and the given demanded amount match, and thereby determines distribution of an amount of production of each producer on the basis of the production combination and the amount-of-production candidate.

13. The optimum production-distribution determination apparatus according to claim 12, wherein the optimum production-distribution determination apparatus is configured by being separated into:

a total supply curve calculation unit that calculates the total supply curve model; and
an amount-of-production distribution calculation unit that determines distribution of an amount of production of each producer by using the total supply curve model generated by the total supply curve calculation unit, and the amount-of-production distribution calculation unit executes a process of determining distribution of an amount of production of each producer on the basis of the input total supply curve model and the given demanded amount.

14. The optimum production-distribution determination apparatus according to claim 12 or 13, wherein when distribution of an amount of production of each of the producers is determined in a system in which products for which distribution is conducted are produced in a plurality of stages, the amount of production determination calculation unit repeats a process of determining, after distribution for each producer is determined in one stage, distribution for each producer in a stage subsequent to the one stage on the basis of the distribution sequentially so as to determine distribution of an amount of production of each producer in the plurality of stages.

15. The optimum production-distribution determination apparatus according to claim 14, wherein the amount-of-production distribution calculation unit determines, in the one stage, distribution to a first producer supplying products to a demander that receives supply of the products in the end, and determines, in a stage subsequent to the one stage, distribution to a second producer supplying products to the first demander.

16. The optimum production-distribution determination apparatus according to any one of claims 12 through 15, wherein the total supply curve calculation unit obtains a total supply curve model expressed by a logical formula by using a first-order predicate logic formula and quantifier elimination.

17. The optimum production-distribution determination apparatus according to claim 12 or 13, further comprising a visualization unit that visualizes a step of determining distribution of an amount of production of each of the producers by using the total supply curve model and the each-producer supply curve models.

18. A recording medium having stored therein an optimum production-distribution determination program that causes a computer to execute a process of determining optimum distribution of an amount of production to a plurality of producers, the process comprising:

synthesizing each-producer supply curve models that represent a relationship between an amount of supply of each producer and a marginal cost so as to calculate a total supply curve model representing a relationship between a total amount of supply and a marginal cost when the each-producer supply curve models are input,;
determining an optimum price from the total supply curve model in accordance with a given demanded amount;
determining an amount-of-production candidate of each producer on the basis of the each-producer supply curve models and the determined optimum price;
adjusting a production combination that represents whether or not each of the plurality of producers conducts production so that a sum of amounts of production of respective producers and the given demanded amount match; and
determining distribution of an amount of production of each producer on the basis of the production combination and the amount-of-production candidate.

19. The recording medium according to claim 18, wherein
the optimum production-distribution determination program is configured by being separated into:

a total supply curve calculation program that calculates the total supply curve model; and
an amount-of-production distribution calculation program that determines distribution of an amount of production of each producer by using the total supply curve model generated by the total supply curve calculation program, and
the amount-of-production distribution calculation program executes a process of determining distribution of an amount of production of each producer on the basis of the input total supply curve model and the given demanded amount.

20. The recording medium according to claim 18 or 19, wherein
when distribution of an amount of production of each of the producers is determined in a system in which products for which distribution is conducted are produced in a plurality of stages, a process of determining, after distribution for each producer is determined in one stage, distribution for each producer in a stage subsequent to the one stage on the basis of the distribution is repeated sequentially so as to determine distribution of an amount of production of each producer in the plurality of stages.

21. The recording medium according to claim 20, wherein
in the one stage, distribution to a first producer supplying products to a demander that receives a supply of the products in the end is determined, and in a stage subsequent to the one stage, distribution to a second producer supplying products to the first demander is determined.

22. The recording medium according to any one of claims 18 through 21, wherein
in a process of calculating the total supply curve model, a total supply curve model expressed by a logical formula is obtained by using a first-order predicate logic formula and quantifier elimination.

23. The recording medium according to one of claim 18 or 19, wherein
a step of determining distribution of an amount of production of each of the producers is visualized by using the total supply curve model and the each-producer supply curve models.

24. An optimum production-distribution determination apparatus that determines optimum distribution of an amount of production to a plurality of producers, the apparatus comprising:

an optimum price search unit that determines an optimum price from a total supply curve model in accordance with a given demanded amount, the total supply curve model being input from a different apparatus including a total supply curve calculation unit that calculates a total supply curve model representing a relationship between a total amount of supply and a marginal cost by synthesizing each-producer supply curve models that represent a relationship between an amount of supply of each producer and marginal costs when the each-producer supply curve models are input; and
an each-producer distribution calculation unit that determines an amount-of-production candidate of each producer on the basis of the input each-producer supply curve models and the determined optimum price, adjusts a production combination that represents whether or not each of the plurality of producers conducts production so that a sum of amounts of production of respective producers and the given demanded amount match, and thereby determines distribution of an amount of production of each producer on the basis of the production combination and the amount-of-production candidate.

OPTIMUM PRODUCTION-DISTRIBUTION DETERMINATION APPARATUS 1

DEMANDED AMOUNT L

ASC

TOTAL SUPPLY CURVE MODEL

MARGINAL COST

TOTAL AMOUNT OF SUPPLY

OPTIMUM PRICE λ

DEMANDED AMOUNT L

OPTIMUM PRICE λ

EACH-PRODUCER SUPPLY CURVE MODEL ISCi

ISC1

PRODUCER 1

MARGINAL COST 1

λ

AMOUNT OF SUPPLY S1

ISCn

PRODUCER n

MARGINAL COST 1

λ

AMOUNT OF SUPPLY Sn

EACH-PRODUCER OPTIMUM AMOUNT OF PRODUCTION

F I G. 1

**F I G. 2**

OPTIMUM
PRODUCTION-DISTRIBUTION
DETERMINATION PROGRAM
100

EACH-PRODUCER SUPPLY
CURVE MODEL ISCi

↓

TOTAL SUPPLY CURVE
CALCULATION UNIT — 11

↓

TOTAL SUPPLY CURVE
MODEL ASC

↓

DEMANDED
AMOUNT L →

OPTIMUM PRICE SEARCH UNIT — 12

↓

OPTIMUM PRICE $\lambda$

↓

EACH-PRODUCER DISTRIBUTION
CALCULATION UNIT — 13

↓

EACH-PRODUCER OPTIMUM
AMOUNT OF PRODUCTION

**F I G. 3**

**EACH-PRODUCER SUPPLY CURVE MODEL ISCi**

MARGINAL COST 1 — PRODUCER 1
C'1
S1
AMOUNT OF SUPPLY 1

· · ·

MARGINAL COST n — PRODUCER n
C'n
Sn
AMOUNT OF SUPPLY n

TOTAL SUPPLY CURVE CALCULATION UNIT 11

MARGINAL COST $\lambda$ — 111

TOTAL AMOUNT OF SUPPLY $S = \sum_{i=1}^{n} S_i$
$\lambda = C'_i(S_i)$ for $i=1, \cdots, n$ — 112

FEASIBLE SOLUTION CALCULATION OF TOTAL AMOUNT OF SUPPLY S AND MARGINAL COST $\lambda$ — 113

MARGINAL COST — TOTAL SUPPLY CURVE MODEL ASC
$\lambda$
S TOTAL AMOUNT OF SUPPLY

26

F I G. 4

F I G. 5

OPTIMUM PRICE $\lambda$

EACH-PRODUCER DISTRIBUTION CALCULATION UNIT 13

$i:=1$  — 131

i-th PRODUCER DISTRIBUTION CANDIDATE CALCULATION UNIT $\{S_i\}\_\{i=1, \cdots, n\}$  — 132

133 — $i=n$ ?  — no → $i:=i+1$ — 134

yes ↓

PRODUCTION COMBINATION DETERMINATION OF EACH PRODUCER $\{x_i = 0 \text{(NOT USE) OR } 1 \text{(USE)}\}\_i$  — 135

DEMANDED AMOUNT L →

SUPPLY-DEMAND BALANCE CALCULATION TOTAL AMOUNT OF SUPPLY $S' = \Sigma\_\{i=1\}^n S_i \ x_i$ SUPPLY-DEMAND BALANCE $\Delta = S-L$  — 136

137 — IS SUPPLY-DEMAND BALANCE REALIZED? $(\Delta = 0?)$  — no

yes ↓

EACH-PRODUCER OPTIMUM AMOUNT OF PRODUCTION $\{S_i \ x_i\}\_\{i=1, \cdots, n\}$

FIG. 6

OPTIMUM PRICE $\lambda$

·i-th PRODUCER DISTRIBUTION
CALCULATION UNIT

COMPARE OPTIMUM
PRICE AND MARGINAL COST OF
PRODUCER i                    1321

LOWER THAN LOWER LIMIT
OF MARGINAL COST              1322

WITHIN RANGE BETWEEN UPPER
AND LOWER LIMITS OF
MARGINAL COST                1324

HIGHER THAN UPPER
LIMIT OF MARGINAL COST       1326

DISTRIBUTION
DETERMINATION METHOD A        1323

DISTRIBUTION
DETERMINATION METHOD B        1325

DISTRIBUTION
DETERMINATION METHOD C        1327

AMOUNT-OF-SUPPLY
CANDIDATE Si

F I G. 7

DISTRIBUTION DETERMINATION METHODA_1323

OPTIMUM PRICE $\lambda$

SUPPLY CURVE MODEL OF PRODUCER i

MARGINAL COST i

SUPPLY CURVE OF PRODUCER i

LOWER LIMIT OF MARGINAL COST i

OPTIMUM PRICE $\lambda$

AMOUNT OF SUPPLY i

LOWER LIMIT OF AMOUNT OF SUPPLY i

UPPER LIMIT OF AMOUNT OF SUPPLY i

AMOUNT-OF-SUPPLY CANDIDATE $Si := 0$

AMOUNT-OF-SUPPLY CANDIDATE $Si$

F I G. 8

FIG. 9

F I G.  1 0

F I G. 1 1

TOTAL SUPPLY CURVE MODEL ASC

TOTAL AMOUNT OF SUPPLY [Kg/h]

$\mathcal{S}$

MARGINAL COST
[THOUSAND
YEN/Kg]

$\mathcal{C}'$

F I G. 1 2

EP 3 188 115 A1

F I G. 1 3

36

FIG. 14

F I G. 15

EACH-PRODUCER
DISTRIBUTION
CALCULATION
UNIT 13

AMOUNT-OF-SUPPLY CANDIDATE OF supply1 S1=1950
AMOUNT-OF-SUPPLY CANDIDATE OF supply2 S2=2050
AMOUNT-OF-SUPPLY CANDIDATE OF supply3 S3=0    132_1

DETERMINATION OF PRODUCTION COMBINATION OF
RESPECTIVE PRODUCERS{xi = 0(NOT USE) or 1(USE)}    135_1
x1 = 1
x2 =1
x3=0

DEMANDED
AMOUNT
L=4000

SUPPLY-DEMAND BALANCE CALCULATION    136_1
TOTAL AMOUNT OF SUPPLY S=S1*1+S2*1+S3*0=4000
SUPPLY-DEMAND BALANCE △=S-L =0

137
IS SUPPLY-DEMAND
BALANCE REALIZED? (△=0?)

yes

EACH-PRODUCER OPTIMUM AMOUNT OF PRODUCTION
Supply1:S1*1=1950
Supply2:S2*1=2050
Supply3:S3*0=0

F I G.  1 6

FIG. 17

OPTIMUM PRICE $\lambda = 0.8$

i-th PRODUCER DISTRIBUTION CALCULATION UNIT

SUPPLY CURVE OF supply1 ISC1

SUPPLY CURVE OF supply2 ISC2

SUPPLY CURVE OF supply3 ISC3

AMOUNT-OF-SUPPLY CANDIDATE OF supply1 S1=1000
AMOUNT-OF-SUPPLY CANDIDATE OF supply2 S2=0
AMOUNT-OF-SUPPLY CANDIDATE OF supply3 S3=1500

EP 3 188 115 A1

EP 3 188 115 A1

F I G. 1 8

EACH-PRODUCER
DISTRIBUTION
CALCULATION UNIT 13

AMOUNT-OF-SUPPLY CANDIDATE OF supply1 S1=1000
AMOUNT-OF-SUPPLY CANDIDATE OF supply2 S2=0
AMOUNT-OF-SUPPLY CANDIDATE OF supply3 S3=1500          132_2

DETERMINATION OF PRODUCTION COMBINATION OF
RESPECTIVE PRODUCERS {xi = 0(NOT USE) or 1(USE)}
x1 = 0
x2 =0
x3=1                                                    135_2

DEMANDED
AMOUNT
L=1500

SUPPLY-DEMAND BALANCE CALCULATION
TOTAL AMOUNT OF SUPPLY S=S1*0+S2*0+S3*1=1500
SUPPLY-DEMAND BALANCE  Δ=S-L =0                          136_2

IS SUPPLY-DEMAND
BALANCE REALIZED? (Δ=0?)                                 137

yes

EACH-PRODUCER OPTIMUM AMOUNT OF PRODUCTION
Supply1:S1*0=0
Supply2:S2*0=0
Supply3:S3*1=1500

FIG. 19

```
                        ┌──────────────┐
                        │  DEMANDER    │
                        │   1 ─ 1      │
                        └──────┬───────┘
                               │ D1-1
FIRST STAGE ═══════════════════╪═══════════════════════
          │ S1-1                                  │ S1-2
   ┌──────┴───────┐                        ┌──────┴───────┐
   │  PRODUCER    │                        │  PRODUCER    │
   │   1 ─ 1      │                        │   1 ─ 2      │
   └──────┬───────┘                        └──────┬───────┘
SECOND STAGE   │ D2-1         SECOND STAGE         │ D2-2
═══════════════╪═══════       ══════════════════════╪══════
   │ S2-1          │ S2-2         │ S2-3              │ S2-4
┌──┴────┐     ┌────┴───┐    ┌─────┴──┐         ┌──────┴─┐
│PRODUCER│    │PRODUCER│    │PRODUCER│         │PRODUCER│
│ 2 ─ 1 │    │ 2 ─ 2 │    │ 2 ─ 3 │         │ 2 ─ 4 │
└───────┘     └────────┘    └────────┘         └────────┘
```

F I G.  2 0

F I G. 2 1

EP 3 188 115 A1

STAGE DISTRIBUTION CONTROL UNIT 10

i=1, j=1 ~ 121

DEMANDED
AMOUNT
D1-1

DEMANDED AMOUNT Di-j OF
DEMANDER i-j IN i-th STAGE ~ 122

i := i+1
j=1, 2, ···

127

OPTIMUM PRODUCTION-
DISTRIBUTION DETERMINATION
PROGRAM 100 ~ 123

OPTIMUM AMOUNT OF PRODUCTION Si-j
OF PRODUCER i-j IN i-th STAGE
(j=1, 2, ···.) ~ 124

DOES PRODUCER
i-j RECEIVE DISTRIBUTION IN
(i+1)-th STAGE?
(j=1, 2, ···) ~ 125

yes

DEMANDED AMOUNT D(i+1)-j OF
DEMANDER (i+1)-j IN (i+1)-th
STAGE=OPTIMUM AMOUNT OF SUPPLY
Si-j OF DEMANDER i-j IN i-th
STAGE
(j=1, 2, ···) 126

no

OPTIMUM AMOUNT OF PRODUCTION Si-j OF
PRODUCER i-j IN i-th STAGE
(i=1, 2, ···,    j=1, 2, ···) ~ 128

44

F I G. 2 2

F I G. 2 3

(a) SUPPLY CURVE OF supply1

(b) SUPPLY CURVE OF supply1

(c) SUPPLY CURVE OF supply3

(d) SUPPLY CURVE OF trans1

TOTAL SUPPLY CURVE MODEL (FIRST STAGE-demand1) ASC_dmd

MARGINAL COST
[THOUSAND
YEN/Kg]

$p\_d1$

$d\_d1$

TOTAL AMOUNT OF SUPPLY [Kg/DAY]

F I G. 2 4

TOTAL SUPPLY CURVE MODEL (FIRST STAGE-trans1)ASC_tns_1

MARGINAL COST
[THOUSAND
YEN/Kg]

$p\_t1a$

$s\_t1$

TOTAL AMOUNT OF SUPPLY [Kg/DAY]

F I G. 2 5

EP 3 188 115 A1

F I G. 2 6

TOTAL SUPPLY CURVE MODEL (SECOND STAGE-trans1) ASC_tns_2

MARGINAL COST [THOUSAND YEN/Kg]

$p\_t1b$

$d\_t1$

TOTAL AMOUNT OF SUPPLY [Kg/DAY]

F I G. 2 7

DEMANDED AMOUNT IN FIRST STAGE
L1=3500[Kg/DAY]

TOTAL SUPPLY CURVE MODEL (FIRST STAGE−demand1) ASC_dmd

OPTIMUM PRICE
p_d1=1.6

DEMANDED AMOUNT
L1=3500

*p_d1*

*d_d1*

OPTIMUM PRICE

F I G. 2 8

OPTIMUM PRICE p_d1=1.6

DISTRIBUTION CALCULATION
UNIT OF PRODUCER i IN i-th STAGE

SUPPLY CURVE OF supply1

SUPPLY CURVE OF trans1 (FIRST STAGE) ASC_tns_1

AMOUNT-OF-SUPPLY CANDIDATE OF supply1
S_supply1=1667
AMOUNT-OF-SUPPLY CANDIDATE OF trans1
S_trans1=1833

OPTIMUM AMOUNT OF PRODUCTION OF
supply1 S_supply1=1667
OPTIMUM AMOUNT OF PRODUCTION OF trans1
S_trans1=1833

EP 3 188 115 A1

F I G. 2 9

DEMANDED AMOUNT IN SECOND STAGE
L2=S_trans1=1833[kg/DAY]

TOTAL SUPPLY CURVE MODEL (SECOND STAGE −trans1)

OPTIMUM PRICE
p_t1b=1.27

DEMANDED
AMOUNTL2=1833

$p\_t1b$

$d\_t1$

OPTIMUM PRICE
P2b=1.27

F I G. 30

OPTIMUM PRICE
p_t1b=1.27

·DISTRIBUTION CALCULATION
UNIT OF PRODUCER j IN SECOND
STAGE

SUPPLY CURVE OF supply2

MARGINAL COST [THOUSAND YEN/Kg]

- MARGINAL COST 2
- OPTIMUM PRICE

AMOUNT OF SUPPLY OF ITEMS [Kg/DAY]

SUPPLY CURVE OF supply3

MARGINAL COST [THOUSAND YEN/Kg]

- MARGINAL COST 3
- OPTIMUM PRICE

1833

AMOUNT OF SUPPLY OF ITEMS [Kg/DAY]

AMOUNT-OF-SUPPLY CANDIDATE OF
supply2 S_supply2=0
AMOUNT-OF-SUPPLY CANDIDATE OF
supply3 S_supply3=1833

OPTIMUM AMOUNT OF PRODUCTION OF
supply2 S_supply2=0
OPTIMUM AMOUNT OF PRODUCTION OF
supply3 S_supply3=1833

AMOUNT OF CIRCULATED ITEMS s_t
ITEM PRICE p_t

FACTORY (supply3)

s_s3 ITEM

p_s3

FACTORY (supply2)

s_s3 ITEM +

p_s3

s_t

p_t

F I G. 3 1

EACH-PRODUCER SUPPLY
CURVE MODEL ISC

TOTAL SUPPLY CURVE
CALCULATION UNIT 11

EACH-PRODUCER SUPPLY CURVE MODEL

supply3
$(s\_s3 = 0)$
Or $(( 500 <= s\_s3 <= 1500)$ And $(0.6 * (s\_s3-500) - 1000 * (p\_s3-0.2) = 0))$
Or $((1500 < s\_s3 <= 2000)$ And $(0.7 * (s\_s3-1500) - 500 * (p\_s3-0.8) = 0))$

supply2
$(s\_s2 = 0)$
Or $((1500 <= s\_s2 <= 2000)$ And $(0.4 * (s\_s2-1500) - 500 * (p\_s2-1.5) = 0))$
Or $((2000 < s\_s2 <= 2800)$ And $(0.8 * (s\_s2-2000) - 800 * (p\_s2-1.9) = 0))$

111_4

MARGINAL COST p_t

112_4

TOTAL AMOUNT OF SUPPLY $s\_t=s\_s3+s\_s2$
MARGINAL COST $p\_t=p\_s3(s\_s3) = p\_s2(s\_s2)$

113_4

FEASIBLE SOLUTION CALCULATION OF TOTAL
AMOUNT s_t AND MARGINAL COST p_t

F I G. 3 2

**FIG. 33**

FIRST-ORDER PREDICATE LOGICAL FORMULA

```
Ψ : =∃s_s3∃ p_s3 ∃ s_s2 ∃ p_s2
((s_s3 = 0)
  Or (( 500 <= s_s3 <= 1500) And (0.6 * (s_s3-500) - 1000 * (p_s3-0.2) = 0))
    Or ((1500 <  s_s3 <= 2000) And (0.7 * (s_s3-1500) - 500 * (p_s3-0.8) = 0))
)
And
((s_s2 = 0)
  Or ((1500 <= s_s2 <= 2000) And (0.4 * (s_s2-1500) - 500 * (p_s2-1.5) = 0))
  Or ((2000 <  s_s2 <= 2800) And (0.8 * (s_s2-2000) - 800 * (p_s2-1.9) = 0))
)
And
(s_t = s_s3 + s_s2)
And
(p_t=p_s3 = p_s2)
;
```

FEASIBLE SOLUTION CALCULATION OF TOTAL AMOUNT OF SUPPLY s_t AND MARGINAL COST p_t 113

QUANTIFIER ELIMINATION

LOGICAL FORMULA

```
Φ : =
. . .
```

TOTAL SUPPLY CURVE MODEL ASC

EP 3 188 115 A1

F I G. 3 4

LOGICAL FORMULA

```
Φ : = (
-p_t < 0 && -s_t < 0 && -100 - 1000*p_t < 0 && -p_t < 0
&& 51 - s_t <= 0 && -27 + 10*p_t <= 0 && 19 - 10*p_t < 0
&& -150 + s_t - 1000*p_t <= 0 && 50 - s_t + 1000*p_t <= 0
)
 ||
(
-6500/7 - (5000*p_t)/7 < 0 && -p_t < 0 && -p_t < 0
&& -s_t < 0 && 4 - 5*p_t < 0 && 51 - s_t <= 0
&& -6850/7 + s_t - (5000*p_t)/7 <= 0 && 6150/7 - s_t + (5000*p_t)/7 <= 0
&& -3 + 2*p_t <= 0)
 ||
(
-500/3 - (5000*p_t)/3 < 0 && -p_t < 0 && -p_t < 0
&& -s_t < 0 && 51 - s_t <= 0 && -650/3 + s_t - (5000*p_t)/3 <= 0
&& 350/3 - s_t + (5000*p_t)/3 <= 0 && 1 - 5*p_t <= 0 && -4 + 5*p_t <= 0
)
 ||
(
375 - 1250*p_t < 0 && -p_t < 0 && -p_t < 0 && -s_t < 0
&& 3 - 10*p_t < 0 && 51 - s_t <= 0 && 325 + s_t - 1250*p_t <= 0
&& -425 - s_t + 1250*p_t <= 0 && 3 - 2*p_t <= 0 && -19 + 10*p_t <= 0
)
 ||
(
-s_t < 0 && -p_t < 0 && 51 - s_t <= 0 && 3/2 - p_t == 0
&& -3550 + s_t <= 0 && 3450 - s_t <= 0
)
;
```

F I G. 3 5

C LANGUAGE
FUNCTION

```
bool eq(double x);
bool ge(double x);
bool le(double x);
bool ne(double x);
bool gt(double x);
bool lt(double x);
```
$\cdots(\alpha)$

```
//
double f1(double x, double y)
  { return (-y); }
double f2(double x, double y)
  { return (-x); }
double f3(double x, double y)
  { return (double(-100) - 1000*y); }
double f4(double x, double y)
  { return (double(51) - x); }
double f5(double x, double y)
  { return (double(-27) + 10*y); }
...
```
$\cdots(\beta)$

```
//
bool eval_logic(double x, double y) {
return
(lt(f1(x,y)) && lt(f2(x,y)) && lt(f3(x,y)) && le(f4(x,y)) && le(f5(x,y)) && ...
;
}
```
$\cdots(\gamma)$

FIG. 36

**F I G. 37**

EACH-PRODUCER SUPPLY CURVE MODEL

supply3 — ex_s3

```
(s_s3 = 0)
  Or (( 500 <= s_s3 <= 1500) And (0.6 * (s_s3-500) - 1000 * (p_s3-0.2) = 0))
  Or ((1500 <  s_s3 <= 2000) And (0.7 * (s_s3-1500) - 500 * (p_s3-0.8) = 0))
```

supply2 — ex_s2

```
(s_s2 = 0)
  Or ((1500 <= s_s2 <= 2000) And (0.4 * (s_s2-1500) - 500 * (p_s2-1.5) = 0))
  Or ((2000 <  s_s2 <= 2800) And (0.8 * (s_s2-2000) - 800 * (p_s2-1.9) = 0))
```

supply1 — ex_s1

```
(s_s1 = 0)
  Or (((1000 <= s_s1 <= 2000) And (12/10 * (s_s1-1000) - 1000 * (p_s1-8/10) = 0))
  Or ((2000 < s_s1 <= 3000) And (2 * (s_s1-2000) - 1000 * (p_s1-2) = 0)))
```

trans1 — ex_t1

```
((0 <= d_t1 <= 5000) And (3/10*(d_t1-0)-5000*(p_t1-2/10) = 0))
  And (d_t1 = s_s3+ s_s2)
  And (p_t1b = p_s3 = p_s2)
  And (s_t1 = d_t1)
  And (p_t1a = p_t1b + p_t1)
```

EACH-PRODUCER SUPPLY CURVE MODEL ISC

F I G. 3 8

```
          ┌─────────────────────────────┐
          │     EACH-PRODUCER SUPPLY     │
          │      CURVE MODEL ISC         │
          └─────────────────────────────┘
                        │
                        ▼
   ┌──────────────────────────────────────────────┐
   │  ┌──────────────────────────────────┐         │
   │  │     MARGINAL COST p_d1            │ 〜 111_5 │
   │  └──────────────────────────────────┘         │
   │                  │                             │
   │                  ▼                             │
   │  ┌──────────────────────────────────┐         │
   │  │ TOTAL AMOUNT OF SUPPLY d_d1=s_t1+s_s1 │ 〜 112_5 │
   │  │ MARGINAL COST p_d1=p_t1a = p_s1   │         │
   │  └──────────────────────────────────┘         │
   │                  │                             │      TOTAL SUPPLY CURVE
   │                  ▼                             │      CALCULATION UNIT 11
   │  ┌──────────────────────────────────┐ 113_5   │
   │  │ FEASIBLE SOLUTION CALCULATION OF TOTAL AMOUNT │      │
   │  │ OF SUPPLY d_d1 AND MARGINAL COST p_d1 │      │
   │  └──────────────────────────────────┘         │
   └──────────────────────────────────────────────┘
                        │
                        ▼
          ┌─────────────────────────────┐
          │  TOTAL SUPPLY CURVE MODEL ASC │
          └─────────────────────────────┘
```

FIG. 39

## FIRST-ORDER PREDICATE LOGICAL FORMULA

$\Psi := \exists s\_s3 \exists p\_s3 \exists s\_s2 \exists p\_s2 \exists s\_s1 \exists p\_s1$
$\exists s\_t1 \exists d\_t1 \exists p\_t1 \exists p\_t1a \exists p\_t1b$
$((s\_s3 = 0)$
  Or $(( 500 <= s\_s3 <= 1500)$ And $(0.6 * (s\_s3-500) - 1000 * (p\_s3-0.2) = 0))$
   Or $((1500 < s\_s3 <= 2000)$ And $(0.7 * (s\_s3-1500) - 500 * (p\_s3-0.8) = 0))$
$)$ And
$((s\_s2 = 0)$
  Or $((1500 <= s\_s2 <= 2000)$ And $(0.4 * (s\_s2-1500) - 500 * (p\_s2-1.5) = 0))$
  Or $((2000 < s\_s2 <= 2800)$ And $(0.8 * (s\_s2-2000) - 800 * (p\_s2-1.9) = 0))$
$)$ And
$((s\_s1 = 0)$
  Or $(((1000 <= s\_s1 <= 2000)$ And $(12/10 * (s\_s1-1000) - 1000 * (p\_s1-8/10) = 0))$
  Or $((2000 < s\_s1 <= 3000)$ And $(2 * (s\_s1-2000) - 1000 * (p\_s1-2) = 0)))$
$)$ And
$(((0 <= d\_t1 <= 5000)$ And $(3/10*(d\_t1-0)-5000*(p\_t1-2/10) = 0))$
  And $(d\_t1 = s\_s3+ s\_s2)$
  And $(p\_t1b = p\_s3 = p\_s2)$
  And $(s\_t1 = d\_t1)$
  And $(p\_t1a = p\_t1b + p\_t1)$
$)$ And
$(d\_d1=s\_t1+s\_s1)$
And
$(p\_d1=p\_t1a = p\_s1)$
;

EP 3 188 115 A1

F I G. 4 0

FEASIBLE SOLUTION
CALCULATION OF TOTAL
AMOUNT OF SUPPLY
d_d1 AND MARGINAL
COST p_d1 113

FIRST-ORDER PREDICATE LOGICAL FORMULA

QUANTIFIER ELIMINATION

LOGICAL FORMULA

$$\Phi := \\ \cdots$$

TOTAL SUPPLY CURVE MODEL

F I G. 4 1

LOGICAL FORMULA

```
Φ : =(
 -3050 + d_d1 <= 0 && 2950 - d_d1 <= 0 && -4 + p_d1 == 0
)
 ||
(
-1050 + d_d1 <= 0 && 950 - d_d1 <= 0 && -4/5 + p_d1 == 0
)
 ||
(
 -2050 + d_d1 <= 0 && 1950 - d_d1 <= 0 && -2 + p_d1 == 0
)
 ||
(
-2050 + d_d1 <= 0 && 1950 - d_d1 <= 0 && -111/50 + p_d1 == 0
)
 ||
(
 -2050 + d_d1 <= 0 && 1950 - d_d1 <= 0 && -91/50 + p_d1 == 0
)
 ||
(
 -69650/33 + d_d1 <= 0 && 66350/33 - d_d1 <= 0 && -4/5 + p_d1 == 0
)
 ||
(
-2850 + d_d1 <= 0 && 2750 - d_d1 <= 0 && -767/250 + p_d1 == 0
)
 . . .
```

EP 3 188 115 A1

TOTAL SUPPLY CURVE MODEL
(FIRST STAGE-demand1) ASC_dmd

FIG. 42

65

F I G. 4 3

F I G. 4 4

## INTERNATIONAL SEARCH REPORT

| International application No. |
| --- |
| PCT/JP2014/080163 |

### A. CLASSIFICATION OF SUBJECT MATTER
*G06Q50/04*(2012.01)i, *G05B19/418*(2006.01)i, *G06F19/00*(2011.01)i

According to International Patent Classification (IPC) or to both national classification and IPC

### B. FIELDS SEARCHED

Minimum documentation searched (classification system followed by classification symbols)
G06Q50/04, G05B19/418, G06F19/00

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)
JSTPlus(JDreamIII), JST7580(JDreamIII)

### C. DOCUMENTS CONSIDERED TO BE RELEVANT

| Category* | Citation of document, with indication, where appropriate, of the relevant passages | Relevant to claim No. |
| --- | --- | --- |
| A | JP 2002-92097 A (Tokyo Gas Co., Ltd.), 29 March 2002 (29.03.2002), paragraphs [0010] to [0048]; fig. 1 to 8 (Family: none) | 1-24 |
| A | JP 2014-160359 A (Fuji Electric Co., Ltd.), 04 September 2014 (04.09.2014), entire text; fig. 1 to 18 (Family: none) | 1-24 |
| A | JP 2014-150682 A (The Chugoku Electric Power Co., Inc.), 21 August 2014 (21.08.2014), entire text; fig. 1 to 16 & JP 5502213 B1 | 1-24 |

☒ Further documents are listed in the continuation of Box C. ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15 December 2014 (15.12.14) | 22 December 2014 (22.12.14) |

| Name and mailing address of the ISA/ | Authorized officer |
| --- | --- |
| Japan Patent Office | |
| Facsimile No. | Telephone No. |

Form PCT/ISA/210 (second sheet) (July 2009)

**INTERNATIONAL SEARCH REPORT**

International application No.

PCT/JP2014/080163

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2014/129470 A1  (Fuji Electric Co., Ltd.), 28 August 2014 (28.08.2014), entire text; fig. 1 to 17 (Family: none) | 1-24 |
| A | Yoshio TANGE et al., "Visualization of Energy Optimization Problems under Supply and Demand Balance for Energy Saving Pre-verification", The Transactions of the Institute of Electrical Engineers of Japan C Denshi·Joho·System Bumonshi, 01 January 2014 (01.01.2014), vol.134, no.1, pages 78 to 84 | 1-24 |

Form PCT/ISA/210 (continuation of second sheet) (July 2009)

## REFERENCES CITED IN THE DESCRIPTION

**Patent documents cited in the description**

- JP 2007255198 A
- JP 2010262426 A
- JP 2012254007 A
- JP 11328239 A

**Non-patent literature cited in the description**

- **HIROKAZU ANAI ; KAZUHIRO YOKOYAMA.** Algorithms of Quantifier Elimination and their Applications-Optimization by Symbolic and Algebraic Methods. University of Tokyo Press, 2011, 214-221

- Visualization of Optimization Problems under Supply and Demand Balance using formula manipulation Technique. **YOSHIO TANGE ; SATOSHI KIRYU ; TETSURO MATSUI ; YOSHIKAZU FUKUYAMA.** 13th Control division convention of The Society of instrument and control engineers, ROMBUN-NO.8C2-5